# EUROPEAN PATENT SPECIFICATION

(11) **EP 3 243 557 B1**
(45) Date of publication and mention of the grant of the patent: **04.03.2020**
(21) Application number: 15876940.6
(22) Date of filing: 15.10.2015
(51) Int. Cl.: A63F 13/428, A63B 69/00, A63B 69/18, A63F 13/211, A63F 13/213, A63F 13/216, A63F 13/44, A63F 13/54, A63F 13/69, A63F 13/807, A63F 13/67

(54) **INFORMATION PROCESSING DEVICE, INFORMATION PROCESSING METHOD, AND PROGRAM**
INFORMATIONSVERARBEITUNGSVORRICHTUNG, INFORMATIONSVERARBEITUNGSVERFAHREN UND PROGRAMM
DISPOSITIF DE TRAITEMENT D'INFORMATIONS, PROCÉDÉ DE TRAITEMENT D'INFORMATIONS ET PROGRAMME

(30) Priority: 05.01.2015 JP 2015000415
(43) Date of publication of application: 15.11.2017
(73) Proprietor: Sony Corporation, Tokyo 108-0075 (JP)
(72) Inventor: MATSUZAWA, Sota, Tokyo 108-0075 (JP); OGATA, Takashi, Tokyo 108-0075 (JP); OOKUBO, Masashi, Tokyo 108-0075 (JP)
(74) Representative: MFG Patentanwälte Meyer-Wildhagen Meggle-Freund Gerhard PartG mbB
(86) International application number: PCT/JP2015/079175
(87) International publication number: WO 2016/111067

(56) References cited:
- DE-U1-202013 103 775
- JP-A- 2000 353 249
- JP-A- 2007 007 081
- JP-A- 2009 018 127
- JP-A- 2010 240 185
- JP-A- 2012 095 914
- JP-A- 2012 239 719
- JP-A- 2014 054 303
- JP-A- 2014 174 589
- US-A1- 2014 073 481
- US-A1- 2014 128 144

## Description

### Technical Field

The present disclosure relates to an information processing device, an information processing method, and a program.

### Background Art

A variety of technologies for detecting diverse behaviors of a user on the basis of, for example, sensor data provided by sensors installed on the user have been proposed. For example, Patent Literature 1 discloses an information processing device which has a plurality of behavior determination units that are specialized in specific behaviors among behaviors of a user, which are recognized through processing of threshold values of sensor data, and generates behavior information on the basis of determination results of the respective behavior determination units.

Patent Literature 2 discloses an exercise support apparatus that obtains motion information including the pitch and the moving speed of a user based on sensor data detected corresponding to the motion of the user performing an exercise by moving.

Patent Literature 3 discloses an in-vehicle gaming system played by a driver alone, or simultaneously or individually by a driver and/or one or more other users.

### Citation List

### Patent Literature

Patent Literature 1: JP 2010-198595A
Patent Literature 2: US 2014/0073481 A1
Patent Literature 3: US 2014/0128144 A1

### Disclosure of Invention

### Technical Problem

There are many ways of utilizing a behavior (an action) of a user detected using, for example, the technology described in Patent Literature 1, without being limited to the generation of information. However, it is hard to say that there have been sufficient suggestions about the ways to utilize the behavior so far.

Thus, the present disclosure proposes a novel and improved information processing device, information processing method, and program which can bring a variety of benefits to a user on the basis of a detection result of an action of a user.

### Solution to Problem

According to a first aspect, the invention provides an information processing device in accordance with independent claim 1. According to a second aspect, the invention provides an information processing method in accordance with independent claim 10. According to a third aspect, the invention provides a computer program in accordance with independent claim 11. Further aspects of the invention are set forth in the dependent claims, the drawings and the following description.

According to the present disclosure, there is provided an information processing device including: an information acquisition unit configured to acquire action information indicating a detected action of a user; and a content providing unit configured to provide content that develops in accordance with a temporal or spatial sequence of the action.

In addition, according to the present disclosure, there is provided an information processing method including: acquiring action information indicating a detected action of a user; and providing, by a processor, content that develops in accordance with a temporal or spatial sequence of the action.

In addition, according to the present disclosure, there is provided a program causing a computer to realize: a function of acquiring action information indicating a detected action of a user; and a function of providing content that develops in accordance with a temporal or spatial sequence of the action.

### Advantageous Effects of Invention

According to the present disclosure described above, it is possible to bring a variety of benefits to a user on the basis of a detection result of an action of a user.

Note that the effects described above are not necessarily limitative. With or in the place of the above effects, there may be achieved any one of the effects described in this specification or other effects that may be grasped from this specification.

### Brief Description of Drawings

[FIG. 1] FIG. 1 is a block diagram illustrating a schematic functional configuration of an information processing device according to an embodiment of the present disclosure.
[FIG. 2] FIG. 2 is a flowchart showing a first example of a process for detecting a jump included in an action of a user in an embodiment of the present disclosure.
[FIG. 3] FIG. 3 is a flowchart showing an example of a high impact detection process shown in FIG. 2.
[FIG. 4] FIG. 4 is a flowchart showing a first example of a free fall detection process shown in FIG. 2.
[FIG. 5] FIG. 5 is a flowchart showing a second example of the free fall detection process shown in FIG. 2.
[FIG. 6] FIG. 6 is a flowchart showing a second example of the process for detecting a jump included in an action of a user in an embodiment of the present disclosure.
[FIG. 7] FIG. 7 is a flowchart showing an example of a candidate section detection process shown in FIG. 6.
[FIG. 8] FIG. 8 is a flowchart showing an example of a vertical acceleration calculation process shown in FIG. 7.
[FIG. 9] FIG. 9 is a flowchart showing an example of a horizontal acceleration calculation process shown in FIG. 7.
[FIG. 10] FIG. 10 is a flowchart showing an example of a process for detecting a turn section included in an action of a user in an embodiment of the present disclosure.
[FIG. 11] FIG. 11 is a flowchart showing an example of a rotation section detection process shown in FIG. 10.
[FIG. 12] FIG. 12 is a flowchart showing an example of a head shake detection process shown in FIG. 10.
[FIG. 13] FIG. 13 is a chart showing an example of a turn detection process shown in FIG. 10.
[FIG. 14] FIG. 14 is a block diagram illustrating an example of a process for estimating a sensor mounting state in an embodiment of the present disclosure.
[FIG. 15] FIG. 15 is a flowchart showing an example of a process for providing a virtual game course in an embodiment of the present disclosure.
[FIG. 16] FIG. 16 is a diagram illustrating a first example of a virtual game course provided in an embodiment of the present disclosure.
[FIG. 17] FIG. 17 is a diagram illustrating a second example of a virtual game course provided in an embodiment of the present disclosure.
[FIG. 18] FIG. 18 is a diagram illustrating a second example of a virtual game course provided in an embodiment of the present disclosure.
[FIG. 19] FIG. 19 is a diagram illustrating a third example of a virtual game course provided in an embodiment of the present disclosure.
[FIG. 20] FIG. 20 is a diagram illustrating a fourth example of a virtual game course provided in an embodiment of the present disclosure.
[FIG. 21] FIG. 21 is a diagram illustrating a fourth example of a virtual game course provided in an embodiment of the present disclosure.
[FIG. 22] FIG. 22 is a diagram illustrating an example of a musical rhythm game provided in an embodiment of the present disclosure.
[FIG. 23] FIG. 23 is a block diagram illustrating a hardware configuration example of an information processing device according to an embodiment of the disclosure.

### Mode(s) for Carrying Out the Invention

Hereinafter, (a) preferred embodiment(s) of the present disclosure will be described in detail with reference to the appended drawings. In this specification and the appended drawings, structural elements that have substantially the same function and structure are denoted with the same reference numerals, and repeated explanation of these structural elements is omitted.

Note that description will be provided in the following order.
1. Functional configuration of information processing device
2. Examples of action detection process
   2-1. Detection of jump-1
   2-2. Detection of jump-2
   2-3. Detection of turn
4. Example of provision of content
   4-1. Provision of virtual game course
   4-2. Provision of musical rhythm game
   4-3. Provision of content whose story develops in accordance with action
   4-4. Provision of collection content
5. Hardware configuration
6. Supplement

### (1. Functional configuration of information processing device)

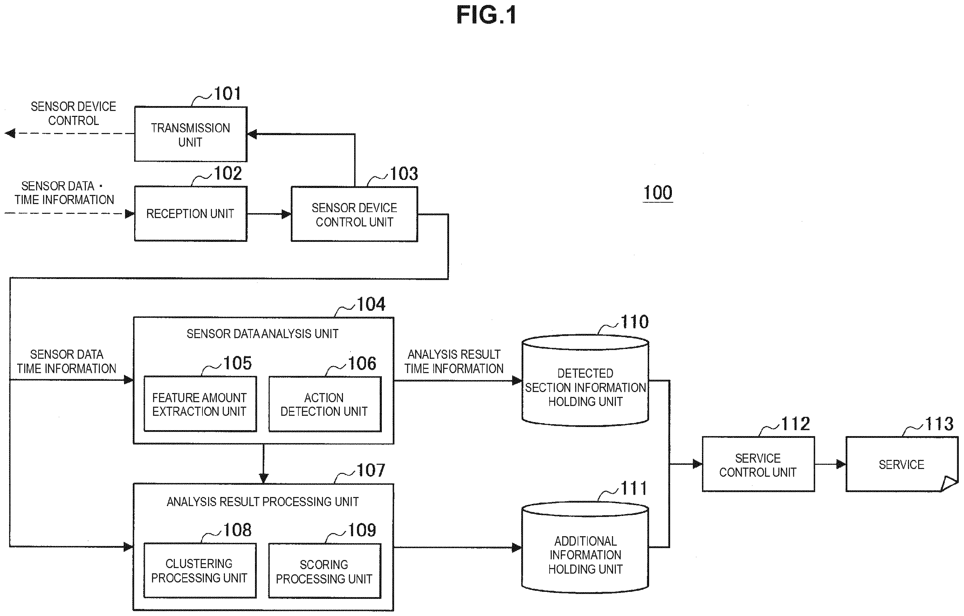

FIG. 1 is a block diagram illustrating a schematic functional configuration of an information processing device according to an embodiment of the present disclosure. Referring to FIG. 1, an information processing device 100 includes a transmission unit 101, a reception unit 102, a sensor device control unit 103, a sensor data analysis unit 104, an analysis result processing unit 107, a detected section information holding unit 110, an additional information holding unit 111, and a service control unit 112.

The information processing device 100 can be, for example, a single device constituting a server on a network or a set of devices as will be introduced in several specific examples to be described below. In addition, the information processing device 100 may be a terminal device that communicates with a server via a network or an independently operating terminal device. Alternatively, functions of the information processing device 100 may be realized by distributing them to a server and a terminal device that communicate with each other on a network. The information processing device 100 or hardware configurations of each of a plurality of devices that realize the information processing device 100 will be described below.

The transmission unit 101 and the reception unit 102 are realized by, for example, communication devices that communicate with a sensor device using various wired or wireless communication schemes. The sensor device includes at least one sensor mounted on a user or a piece of equipment used by the user. The transmission unit 101 transmits control signals output by the sensor device control unit 103 to the sensor device. The reception unit 102 receives sensor data and time information (a timestamp) from the sensor device, and inputs the data into the sensor device control unit 103. In the illustrated example, the reception unit 102 realizes a sensor data reception unit that receives sensor data provided by a sensor mounted on a user or a piece of equipment used by the user. Note that, for example, when the information processing device 100 is a terminal device having at least one sensor, more specifically, a mobile device or a wearable device, the sensor data reception unit may be realized by a processor such as a central processing unit (CPU) that executes a driver program for receiving sensor data from a sensor. In addition, the information processing device according to the present embodiment may have, for example, an acquisition unit that acquires sensor data from an external device having a sensor. Here, the acquisition unit is realized by, for example, a processor such as a CPU that executes "a driver program that receives sensor data from an external device having a sensor via the communication device, which realizes the transmission unit 101 and the reception unit 102, or the like." Note that, when the acquisition unit is provided, the information processing device according to the present embodiment may be configured to include no sensor data reception unit.

The sensor device control unit 103 is realized by, for example, a processor such as a CPU operating in accordance with a program stored in a memory. The sensor device control unit 103 acquires sensor data and time information from the reception unit 102. The sensor device control unit 103 provides the data to the sensor data analysis unit 104 and the analysis result processing unit 107. The sensor device control unit 103 may perform pre-processing on the data when necessary. In addition, the sensor device control unit 103 outputs control signals of the sensor device to the transmission unit 101. In a few embodiments, the sensor device control unit 103 may output the control signals on the basis of feedback on a result of a process of the sensor data analysis unit 104 or the analysis result processing unit 107.

The sensor data analysis unit 104 is realized by, for example, a processor such as a CPU operating in accordance with a program stored in a memory. The sensor data analysis unit 104 executes a variety of analyses using sensor data provided from the sensor device control unit 103. In the illustrated example, the sensor data analysis unit 104 includes a feature amount extraction unit 105 and an action detection unit 106. The feature amount extraction unit 105 extracts various feature amounts from sensor data. The action detection unit 106 detects actions of a user on the basis of the feature amounts extracted from the sensor data by the feature amount extraction unit 105. In the present embodiment, the actions of the user detected by the action detection unit 106 include turns and/or jumps of the user. Furthermore, the action detection unit 106 may detect other actions of the user including walking, running, standing still, moving in a vehicle, and the like. The action of the user can be detected in association with time information (a timestamp) indicating a section in which the action was performed (an action section). The sensor data analysis unit 104 stores analysis results, more specifically, for example, information including action sections of the user detected by the action detection unit 106 in the detected section information holding unit 110. In addition, the sensor data analysis unit 104 provides analysis results to the analysis result processing unit 107.

The analysis result processing unit 107 is realized by, for example, a processor such as a CPU operating in accordance with a program stored in a memory. The analysis result processing unit 107 generates various kinds of additional information to be used by the service control unit 112 in a later stage on the basis of an analysis result of the sensor data analysis unit 104, more specifically, information of the actions of the user detected by the action detection unit 106. In the illustrated example, the analysis result processing unit 107 includes a clustering processing unit 108 and a scoring processing unit 109. For example, when the detected action of the user includes a plurality of actions of the same type, the clustering processing unit 108 may cause the actions to be in clusters on the basis of feature amounts of the actions (which may be feature amounts extracted by the feature amount extraction unit 105 or intermediate feature amounts calculated by the action detection unit 106). In addition, in the same case, the scoring processing unit 109 may calculate scores indicating evaluation of the actions on the basis of the feature amounts. Furthermore, the clustering processing unit 108 and/or the scoring processing unit 109 may calculate new feature amounts on the basis of sensor data provided from the sensor device control unit 103. The analysis result processing unit 107 causes processing results, more specifically, the result of the clustering by the clustering processing unit 108 or information of the scores calculated by the scoring processing unit 109, to be stored in the additional information holding unit 111 together with the time information (the timestamp).

The detected section information holding unit 110 and the additional information holding unit 111 are realized by, for example, various memories or storage devices. The detected section information holding unit 110 and the additional information holding unit 111 temporarily or permanently store information provided from the sensor data analysis unit 104 and the analysis result processing unit 107 as described above. Information stored in the detected section information holding unit 110 and information stored in the additional information holding unit 111 can be associated with each other using, for example, the time information (the timestamp). In addition, the detected section information holding unit 110 and the additional information holding unit 111 may store information regarding each of a plurality of users.

The service control unit 112 is realized by, for example, a processor such as a CPU operating in accordance with a program stored in a memory. The service control unit 112 controls a service 113 using information stored in the detected section information holding unit 110 and/or the additional information holding unit 111. More specifically, the service control unit 112 generates, for example, information to be provided to a user of the service 113 on the basis of information read from the detected section information holding unit 110 and/or the additional information holding unit 111. Note that, when the information processing device 100 is a server, for example, information output by the service control unit 112 can be transmitted to a terminal device via a communication device. In addition, when the information processing device 100 is a terminal device, for example, the information output by the service control unit 112 can be provided to an output device such as a display, a speaker, or a vibrator included in the terminal device.

### (2. Examples of action detection process)

Examples of an action detection process executed in an embodiment of the present disclosure will be described below. In these examples, jumps and turns made when a user snowboards are detected. In a case of snowboarding, for example, a sensor device including an acceleration sensor, an angular velocity sensor, and the like may be mounted directly on a user by being embedded in his or her clothes or incorporated into a wearable terminal device or a mobile terminal device. Alternatively, the sensor device may be mounted in snowboarding goods, for example, a snowboard.

Note that an action detection process executed in the present embodiment is not limited to jumps and turns made while snowboarding, and the action detection process may be executed for, for example, jumps and turns performed in sports other than snowboarding. For example, since jumps and turns are actions that can be commonly performed in a variety of sports, jumps and turns can be detected in a detection process to be described below regardless of the type of sport. In addition, in the action detection process executed in the present embodiment, actions other than jumps and turns may be detected. For example various technologies used in the behavior recognition technology disclosed in JP 2010-198595A or the like can be applied to such an action detection process.

### (2-1. Detection of jump-1)

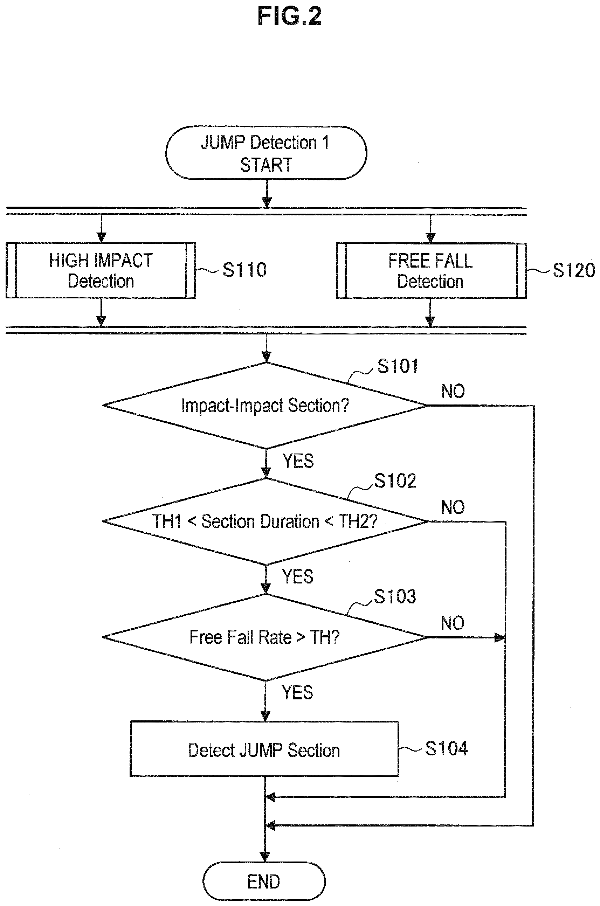

FIG. 2 is a flowchart showing a first example of a process for detecting a jump included in an action of a user in an embodiment of the present disclosure. The illustrated process is executed by, for example, the sensor data analysis unit 104 included in the information processing device 100.

First, the sensor data analysis unit 104 executes a high impact detection process (S110) and a free fall detection process (S120) for each predetermined time frame. Note that these processes will be described in detail below. After receiving results of the processes, the action detection unit 106 included in the sensor data analysis unit 104 determines whether a section sandwiched between two high impact sections has occurred (in which it has been estimated that takeoff and landing are performed) (S101). When such a section has occurred, the action detection unit 106 determines whether duration of the section is between two threshold values (TH1 and TH2) (S102). The threshold values are set, for example, for the purpose of excluding sections that are determined to be too long or too short for a jump.

When the duration is determined to be between the two threshold values in S102, the action detection unit 106 also determines whether a ratio of a free fall section in the aforementioned section exceeds a threshold value (TH) (S103). When the ratio of the free fall section exceeds the threshold value, the section (the section sandwiched between the two high impact sections) is detected to be a jump section (S104).

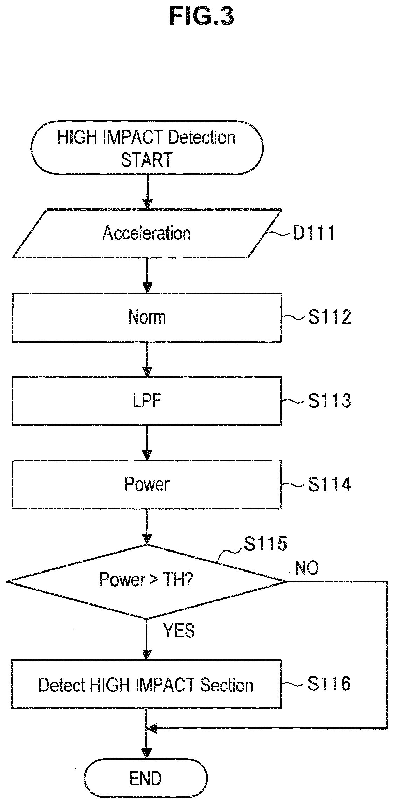

FIG. 3 is a flowchart showing an example of the high impact detection process (S110) shown in FIG. 2. Referring to FIG. 3, acceleration (D111) included in the sensor data is used in the high impact detection process. First, the feature amount extraction unit 105 included in the sensor data analysis unit 104 calculates a norm of acceleration (S112) and then smoothes the norm using a low-pass filter (LPF) (S113). Next, the feature amount extraction unit 105 calculates a power of amplitude for the norm of acceleration that has undergone smoothing for each predetermined time frame (S114). The action detection unit 106 determines whether the power exceeds a threshold value (TH) (S115), and when the power exceeds the threshold value, the corresponding time frame is detected to be a high impact section (S116).

Note that, in the present specification and drawings, appropriate values are set for threshold values denoted as TH, TH1, TH2, and the like in processes. That is, denoting all threshold values as TH does not mean that all of the threshold values have the same value.

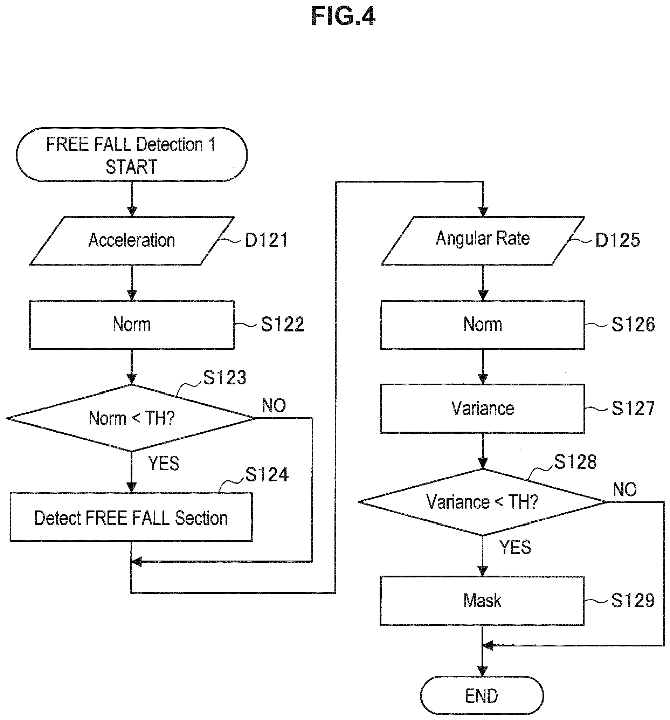

FIG. 4 is a flowchart showing a first example of the free fall detection process (S120) shown in FIG. 2. Referring to FIG. 4, in the free fall detection process as the first example, acceleration (D121) and angular velocity (D125) included in the sensor data are used. First, the feature amount extraction unit 105 calculates a norm of acceleration (S122), and the action detection unit 106 determines whether the norm of each section is lower than a threshold value (TH) (S123). The action detection unit 106 detects a section in which the norm of acceleration is lower than the threshold value to be a free fall section (S124).

Meanwhile, the feature amount extraction unit 105 also calculates a norm of angular velocity (S126), and also calculates a variance of norms in predetermined time frames (S127). The action detection unit 106 determines whether the variance of the norms of angular velocity is lower than a threshold value (TH) (S128), and when the variance is lower than the threshold value, masks the free fall section detected in S124 (i.e., cancels the determination as a free fall section) (S129). The masking process on the basis of the angular velocity is based on the perspective that, since an angular velocity changes when a user makes a jump, a free fall section in which a change (a variance) of an angular velocity is small is caused due to an action other than a jump.

Note that, in the above-described process, the masking process in S126 to S129 may not be necessarily executed after the free fall section determination process in S121 to S124. For example, the action detection unit 106 may first execute the masking process and not execute the free fall section determination process on a section specified as a section to be masked. Alternatively, the masking process may be executed after the jump section detection process (S104) shown in FIG. 2 and a section temporarily detected as a jump section may be masked. Further, the free fall process (S120) shown in FIG. 4 and the like may not be necessarily executed before the section occurrence determination (S101) shown in FIG. 2, and the free fall detection process may be executed on a corresponding section after the section occurrence determination, for example, before a determination of a ratio of a free fall section (S103).

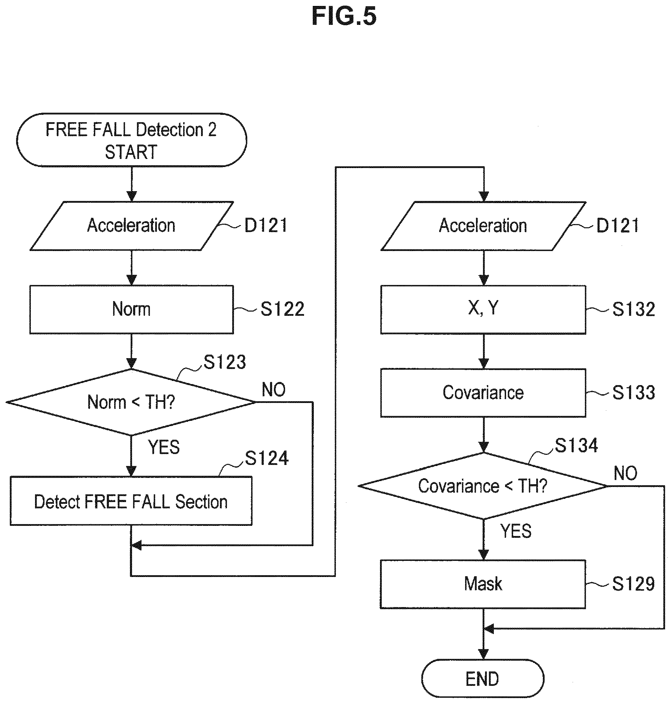

FIG. 5 is a flowchart showing a second example of the free fall detection process (S120) shown in FIG. 2. Referring to FIG. 5, in the free fall detection process as the second example, the acceleration (D121) included in the sensor data provided by the acceleration sensor mounted on a user or a piece of equipment used by the user is used. In S122 to S124, the feature amount extraction unit 105 and the action detection unit 106 execute similar processes to those of the first example and detect a free fall section.

Meanwhile, in the present example, the feature amount extraction unit 105 extracts an X-axis component and a Y-axis component of acceleration (S132), and also calculates covariance of the X-axis component and the Y-axis component of acceleration (S133). More specifically, for example, when a user walks or runs on a reference plane (which is not limited to a horizontal plane and may be a slope), the feature amount extraction unit 105 uses an axis closest to a traveling direction of the user between coordinate axes of an acceleration sensor as the X axis, and an axis closest to a normal direction of the reference plane as the Y axis, and then calculates the covariance of the acceleration components (the X-axis component and the Y-axis component) in axial directions. The action detection unit 106 determines whether the covariance is smaller than a threshold value (TH) (S134) and masks the free fall section detected in S124 when the covariance is smaller than the threshold value (S129). The masking process based on the covariance of the acceleration is effective when a jump desired to be detected is not a so-called vertical jump that only causes displacement in the normal direction of the reference plane, but is a jump that causes displacement in the traveling direction of the user.

### (2-2. Detection of jump-2)

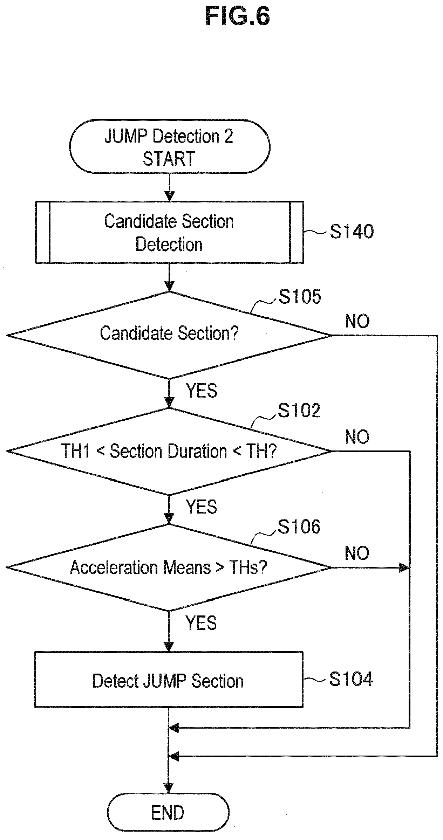

FIG. 6 is a flowchart showing a second example of the process for detecting a jump included in an action of a user in an embodiment of the present disclosure. The illustrated process is executed by, for example, the sensor data analysis unit 104 included in the information processing device 100 as in the first example.

First, the sensor data analysis unit 104 executes a candidate section detection process (S140). Note that details of the process will be described below. After receiving the result of the process, the action detection unit 106 included in the sensor data analysis unit 104 determines whether a candidate section has occurred (S105). When a candidate section occurs, the action detection unit 106 determines whether duration of the section is between two threshold values (TH1 and TH2) (S102) as in the first example. When the duration is between the two threshold values, the action detection unit 106 further determines whether means of acceleration in the vertical direction and the horizontal direction of the section exceed their respective threshold values (THs) (S106). When the means of acceleration exceed their respective threshold value, the candidate section is detected to be a jump section (S104).

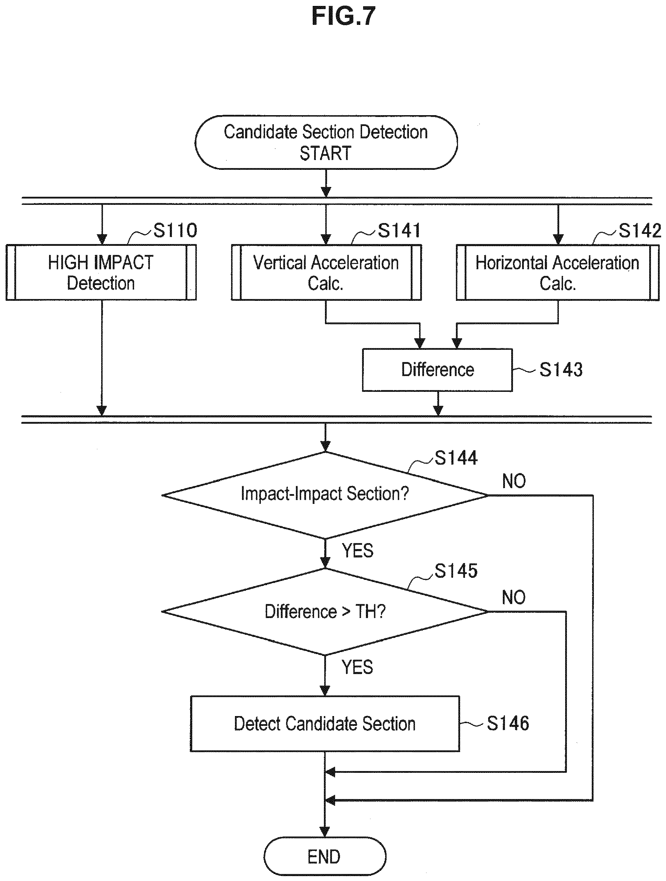

FIG. 7 is a flowchart showing an example of the candidate section detection process (S140) shown in FIG. 6. Referring to FIG. 7, in the candidate section detection process, the high impact detection process (S110) described with reference to FIG. 3 above, a vertical acceleration calculation process (S141), and a horizontal acceleration calculation process (S142) are executed. Furthermore, the feature amount extraction unit 105 included in the sensor data analysis unit 104 calculates a difference between the vertical direction acceleration and the horizontal direction acceleration respectively calculated in S141 and S142 for each section (S143). Then, the action detection unit 106 determines whether a section sandwiched between two high impact sections has occurred (in which takeoff and landing are estimated to be performed) (S144). When such a section has occurred, the action detection unit 106 determines whether a difference between the vertical direction acceleration and the horizontal direction acceleration calculated in S143 exceeds a threshold value (TH) in the section (S145). When the difference exceeds the threshold value, the section (the section sandwiched between two high impact sections) is determined to be a candidate jump section (S146).

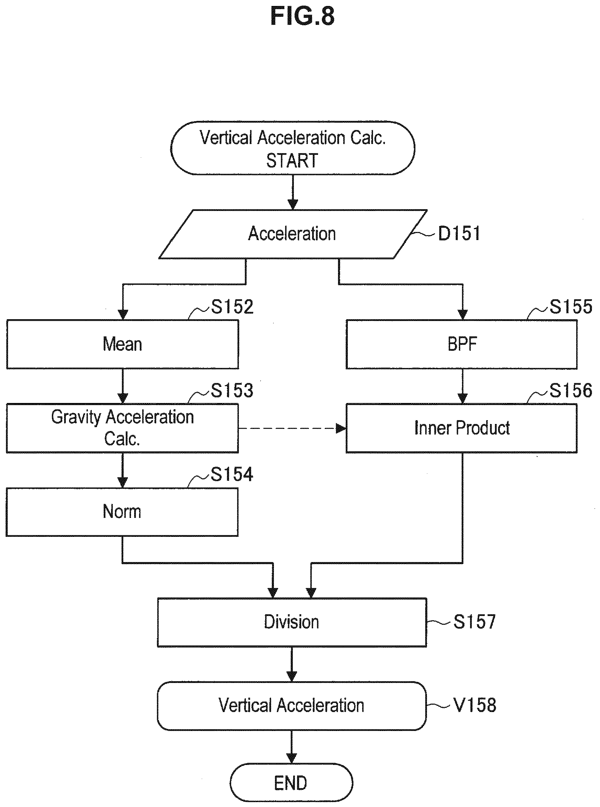

FIG. 8 is a flowchart showing an example of the vertical acceleration calculation process (S141) shown in FIG. 7. Referring to FIG. 8, in the vertical acceleration calculation process, acceleration (D151) included in the sensor data is used. First, the feature amount extraction unit 105 included in the sensor data analysis unit 104 calculates the mean of acceleration (a mean) (S152). The mean calculated here can be, for example, a moving average. On the basis of the mean of the acceleration calculated in S152, the feature amount extraction unit 105 executes a gravitational acceleration calculation process (S153). Further, the feature amount extraction unit 105 calculates a norm of the calculated gravitational acceleration (S154). Note that the gravitational acceleration may be calculated on the basis of the mean such as the moving average or by using a filter such as an LPF.

Meanwhile, the feature amount extraction unit 105 processes the acceleration (D151) with a band-pass filter (BPF) separately from the processes of S152 to S154 (S155). In the illustrated example, the BPF is used for the purpose of removing DC components (i.e., gravity components) included in the acceleration with a low frequency band filter and also performing smoothing on the acceleration with a high frequency band filter. Note that the BPF of S155 may be replaced with a combination of other types of filters, for example, an LPF, a high-pass filter (HPF), and the like. The feature amount extraction unit 105 calculates an inner product of the acceleration processed by the BPF and the gravitational acceleration calculated in S153 (S156).

Further, the feature amount extraction unit 105 divides the inner product calculated in S156 by the norm of the gravitational acceleration calculated in S154 (S157). Accordingly, a vertical acceleration (V158) is obtained. In the illustrated example, the vertical acceleration is calculated by projecting an acceleration obtained by removing a gravitation component with the BPF (S155) in a direction of the gravitational acceleration.

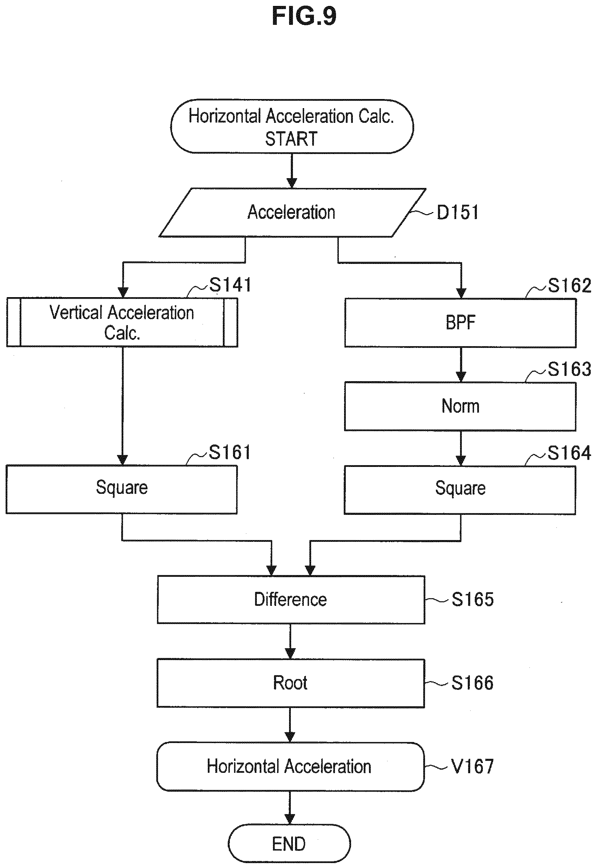

FIG. 9 is a flowchart showing an example of the horizontal acceleration calculation process (S142) shown in FIG. 7. Referring to FIG. 9, the acceleration (D151) included in the sensor data is also used in the horizontal acceleration calculation process. In addition, in the horizontal acceleration calculation process, the vertical acceleration calculated in the vertical acceleration calculation process (S141) described with reference to FIG. 8 is used. More specifically, the feature amount extraction unit 105 included in the sensor data analysis unit 104 squares the vertical acceleration for use (S161).

On the other hand, the feature amount extraction unit acceleration (D151) is processed with the BPF (S162) to remove DC components included in the acceleration and smooth the acceleration. Note that the BPF of S162 may also be replaced with a combination of other types of filters, for example, an LPF, an HPF, and the like. The feature amount extraction unit 105 calculates a norm of the acceleration processed with the BPF (S163) and squares the norm (S164). Further, the feature amount extraction unit 105 calculates a difference between the square of the vertical acceleration calculated in S161 and the square of the horizontal acceleration calculated in S164 (S165), and obtains the horizontal acceleration (V167) with the difference of the square root (S166).

For the jump detection according to an embodiment of the present disclosure as described above, a total of 3 types of jump detection processes are possible: employing the first example (FIG. 4) of the free fall detection process in the first example (FIG. 2) of jump detection, employing the second example (FIG. 5) of the free fall detection process in the same first example (FIG. 2) of jump detection, and employing the second example (FIG. 6) of jump detection. The sensor data analysis unit 104 that includes the action detection unit 106 may execute each of the three types of jump detection processes and finally detect a jump section on the basis of results of the processes. More specifically, for example, when at least one jump section is detected in the three types of jump detection process, the action detection unit 106 may detect the section as a final jump section. Alternatively, when two or more jump sections are detected, or when all three types of jump section are detected, the action detection unit 106 may detect the sections as final jump sections.

### (2-3. Detection of turn)

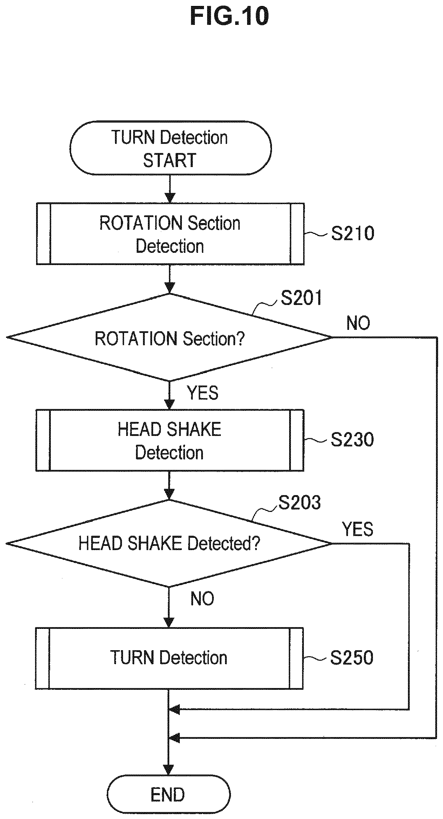

FIG. 10 is a flowchart showing an example of a process for detecting a turn section included in an action of a user in an embodiment of the present disclosure. The illustrated process is executed by, for example, the sensor data analysis unit 104 included in the information processing device 100. In the following processes, the sensor data analysis unit 104 detects rotation included in an action of a user (S210), also detects non-turning rotation included in the rotation (S230), and detects a turn from the rotation from which the non-turning rotation has been removed (S250).

Here, the non-turning rotation includes a rotation occurring through a head shake of the user when, for example, a sensor includes a sensor mounted on the head of the user or equipment mounted on the head of the user. The non-turning rotation can also include a rotation occurring through a body motion, more specifically, a rotation occurring through arm-shaking or arm-circling of the user when a sensor includes a sensor mounted on an arm of the user or a piece of equipment mounted on the arm of the user.

In the present embodiment, a turn section can be detected with higher accuracy by the sensor data analysis unit 104 excluding such a non-turning rotation and then detecting the turn section. From that perspective, the non-turning rotation can be said as noise with respect to a turn to be detected, and in the present embodiment, the sensor data analysis unit 104 can also be said to detect a rotation included in an action of the user, detect noise included in the rotation, and detect a turn from the rotation from which noise has been removed.

First, the sensor data analysis unit 104 executes a rotation section detection process (S210). In the present embodiment, a rotation section is defined to be a section in which an angular velocity in a horizontal plane direction exceeds a threshold value. The sensor data analysis unit 104 determines whether a rotation section has occurred (S201). When a rotation section has occurred, the sensor data analysis unit 104 first executes a head shake detection process (S230). Further the sensor data analysis unit 104 determines whether a head shake has been detected (S203), and when no head shake has been detected, further executes a turn detection process (S250). Through these processes, a section in which a head shake occurs (e.g., a section occurring when a sensor is mounted on a head-mounted wearable terminal device or the like) of the user can be removed from the rotation section, and thus a turn section whose rotation radius, angular velocity, duration, and the like satisfy predetermined conditions can be extracted.

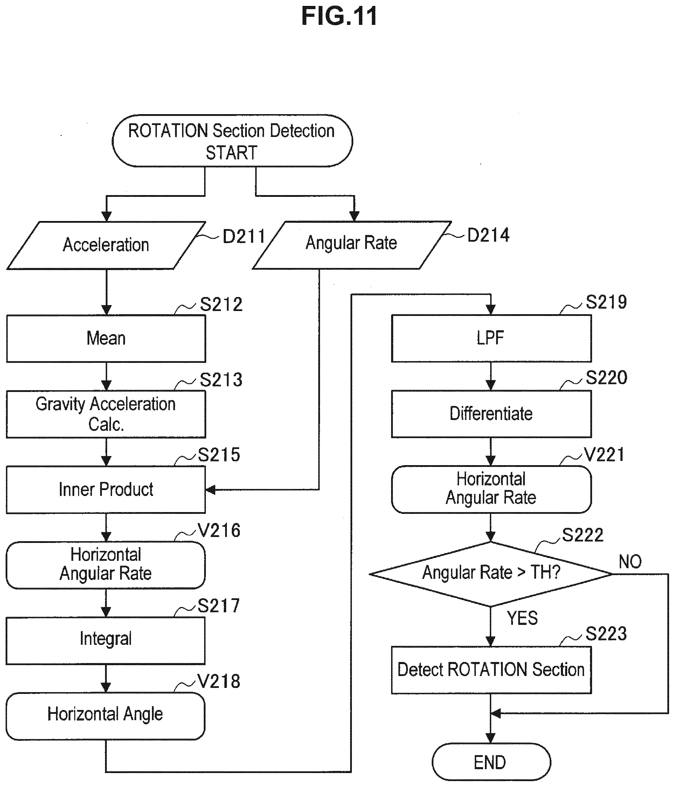

FIG. 11 is a flowchart showing an example of the rotation section detection process (S210) shown in FIG. 10. Referring to FIG. 11, in the rotation section detection process, acceleration (D211) and an angular velocity (D214) included in the sensor data are used. First, the feature amount extraction unit 105 included in the sensor data analysis unit 104 calculates the mean of the acceleration (S212). Here, the calculated mean can be, for example, a moving average. The feature amount extraction unit 105 executes a gravitational acceleration calculation process on the basis of the mean of the acceleration calculated in S212 (S213). Further, the feature amount extraction unit 105 calculates an inner product of a gravitational acceleration calculated in S213 and the angular velocity (D214) (S215). Accordingly, projection of an angular velocity in a direction of the gravitational acceleration, i.e., an angular velocity (V216) in the horizontal plane direction (around a vertical axis) is obtained.

Here, the feature amount extraction unit 105 first integrates the calculated angular velocity (S217), and calculates an angular displacement (V218) in the horizontal plane direction. The feature amount extraction unit 105 processes the angular displacement with a LPF (S219). Further, the feature amount extraction unit 105 differentiates the angular displacement (S220), thereby obtaining an angular velocity in a horizontal plane direction (V221). As the angular velocity of V221 is first integrated in S217 and the angular displacement after the integration is processed with the LPF in S219, the angular velocity of V221 is smoothed in comparison to an angular velocity of V218, and thus noise is removed from waveforms thereof. The action detection unit 106 included in the sensor data analysis unit 104 determines whether the angular velocity (V221) in the horizontal plane direction exceeds a threshold value (S222), and a section in which the angular velocity direction exceeds the threshold value is detected as a rotation section (S223).

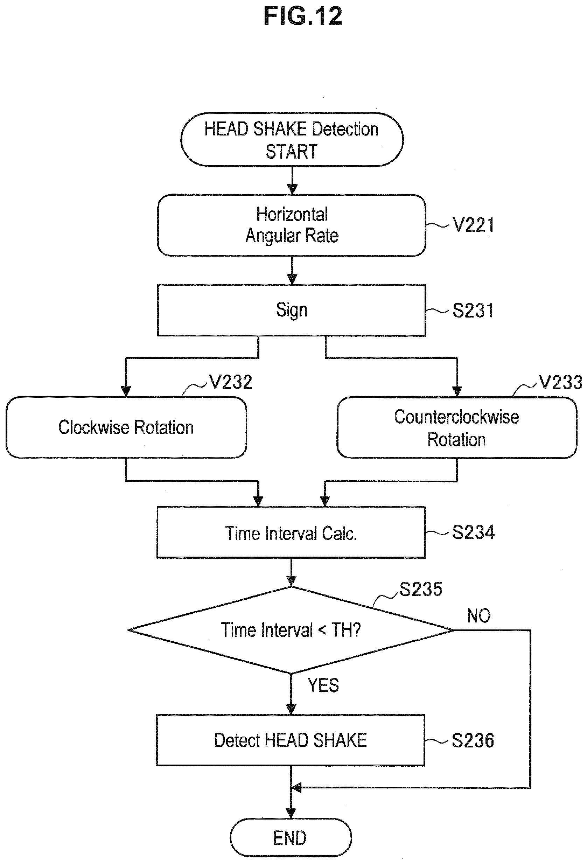

FIG. 12 is a flowchart showing an example of the head shake detection process (S230) shown in FIG. 10. Referring to FIG. 12, in the head shake detection process, the smoothed angular velocity (V221) in the horizontal plane direction calculated in the rotation section detection process shown in FIG. 11 is used. The feature amount extraction unit 105 acquires a sign of the angular velocity (S231). Although any definition of a sign with respect to a direction of a rotation may be possible, a clockwise rotation (V232) and a counterclockwise rotation (V233) are defined as the sign of the angular velocity (V221) in the illustrated example. Further, the feature amount extraction unit 105 calculates a time interval at which a rotation in a reverse direction has occurred (S234). That is, in the illustrated example, the feature amount extraction unit 105 calculates a time interval from the occurrence of the clockwise rotation (V232) to the occurrence of the counterclockwise rotation (V233) and a time interval between the occurrence of the counterclockwise rotation (V233) and the occurrence of the clockwise rotation (V232). The action detection unit 106 determines whether each time interval calculated in S234 is shorter than a threshold value (TH) (S235), and when each time interval is shorter than the threshold value, the occurrence of a head shake is detected (S236).

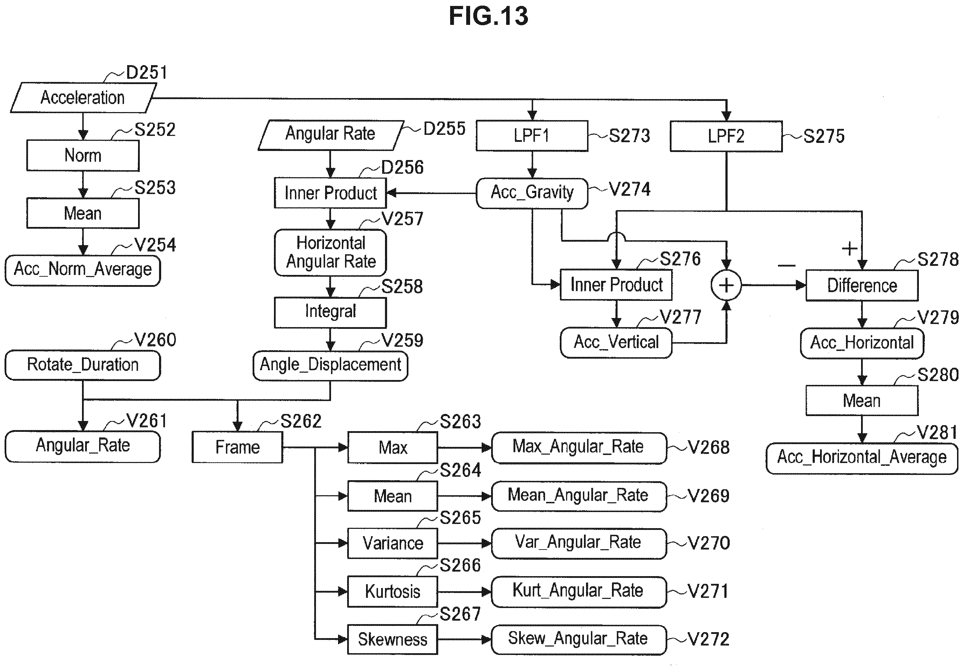

FIG. 13 is a chart showing an example of the turn detection process (S250) shown in FIG. 10. In the turn detection process, the feature amount extraction unit 105 calculates a plurality of feature amounts, and then the action detection unit 106 executes a determination using a threshold value on the basis of the plurality of feature amounts. In FIG. 13, processes of the feature amount extraction unit 105 for calculating each of the feature amounts are shown. Note that, although the processes for calculating each of the feature amounts are described in order below, the processes performed by the feature amount extraction unit 105 may not necessarily be executed in the described order, and can be executed in an arbitrary order as long as prerequisite amounts are acquired or calculated.

First, the feature amount extraction unit 105 calculates a norm of acceleration (D251) included in the sensor data (S252), and calculates the mean of the norm in a predetermined time frame (S253). The average of the norm of acceleration (V254) calculated as described above is used as one of feature amounts for detecting a turn.

Meanwhile, the feature amount extraction unit 105 processes the acceleration (D251) with a first LPF (S273), and calculates gravitational acceleration (V274). Further, the feature amount extraction unit 105 calculates an inner product of an angular velocity (D255) included in the sensor data and the gravitational acceleration (S256). Accordingly, projection of the angular velocity in the direction of the gravitational acceleration, i.e., an angular velocity (V257) in the horizontal plane direction (around the vertical axis), is obtained. The feature amount extraction unit 105 integrates the calculated angular velocity (S258), and calculates angular displacement in a horizontal plane direction (V259). The angular displacement (V259) is also used as one of feature amounts for detecting a turn.

Further, the feature amount extraction unit 105 calculates an angular velocity (V261) on the basis of the angular displacement (V259) and a duration (V260) of a rotation section to be processed. The angular velocity V261 can be smoothed in a longer time frame than the angular velocity D255, (for example, in the entire rotation section. The duration (V260) of the rotation section and an angular change rate (V261) are also used as one type of feature amount for detecting a turn.

In addition, the feature amount extraction unit 105 calculates several feature amounts by analyzing the angular displacement (V259) for a predetermined time frame (S262). More specifically, the feature amount extraction unit 105 calculates a maximum value (S263 and V268), a mean (S264 and V269), a variance (S265 and V270), a kurtosis (S266 and V271), and skewness (S267 and V272) of the angular velocity within the time frame. These feature amounts are also used as feature amounts for detecting a turn.

Meanwhile, the feature amount extraction unit 105 processes the acceleration (D251) with a second LPF (S275). In the illustrated example, while the first LPF (S273) is used to extract the gravitational acceleration (V274) that is a DC component included in the acceleration, the second LPF (S275) is used to smooth the acceleration by filtering out its high frequency area. Thus, pass bands of the LPFs can be set to be different.

The feature amount extraction unit 105 calculates an inner product of the acceleration smoothed by the second LPF (S275) and the gravitational acceleration (V274) extracted by the first LPF (S273) (S276). Accordingly, vertical acceleration (V277) is obtained. Further, the feature amount extraction unit 105 calculates a difference between an acceleration vector composed of the gravitational acceleration (V274) and the vertical acceleration (V277) and the acceleration smoothed by the second LPF (S275) (S278). Accordingly, horizontal acceleration (V279) is obtained. The feature amount extraction unit 105 calculates a mean of horizontal acceleration (S280). The mean of horizontal acceleration (V281) calculated as described above is also used as a feature amount for detecting a turn.

The action detection unit 106 determines whether a turn has occurred on the basis of, for example, the feature amounts extracted from the sensor data as described above. In the illustrated example, the action detection unit 106 executes the determination on the basis of the duration (V260) of the rotation section, the angular displacement (V259) in the horizontal plane direction, the smoothed angular velocity (V261), the mean of the norm of acceleration (V254), the average of the horizontal acceleration (V281), and the maximum value, the mean (V269), the variance (V270), the kurtosis (V271), and the skewness (V272) of the angular velocity within the time frame (V268).

Note that feature amounts to be used in the determination are not limited to the above examples, and, for example, feature amounts other than the above examples may be used or some of the feature amounts of the above example may not be used. For example, types of feature amounts to be used in detection of a turn may be decided from various types of feature amounts that can be extracted from sensor data using main component analysis based on the sensor data obtained when the turn has actually occurred. Alternatively, feature amounts to be used in the determination may be decided on the basis of a propensity of sensor data appearing when a turn has actually occurred. Among the above-described examples, the average of the norm of acceleration (V254) and the average of the horizontal acceleration (V281) are, for example, feature amounts relating to a rotation radius of a turn.

In addition, a threshold value of each feature amount applied to determination by the action detection unit 106 is decided in accordance with, for example, a result of machine learning based on the sensor data obtained when a turn has actually occurred. At this time, whether a turn has actually occurred may be manually decided with reference to, for example, a video of an action simultaneously acquired with the sensor data. Furthermore, a label indicating a type of turn as well as whether a turn has occurred may be given. More specifically, for example, a service provider may give labels that each indicate attributes to an action that is desired to be detected as a turn, desired not to be detected as a turn, or determined to be either or both as a result of referring to a video.

Several examples of the action detection process executed in an embodiment of the present disclosure have been described above. As has already been described, execution of the action detection process in the present embodiment is not limited to jumps and turns occurring during snowboarding, and the action detection process may be executed for jumps and turns occurring in, for example, sports other than snowboarding or scenes other than sports. In addition, an action other than a jump or a turn may be detected in the action detection process executed in the present embodiment. As an example, the action detection unit 106 may detect toppling that occurs in snowboarding or the like. In this case, the feature amount extraction unit 105 may calculate a norm of acceleration similarly to the above-described detection of a jump or a turn, and when the norm of acceleration exceeds a threshold value (e.g., which may be high enough not to appear in normal sliding), the action detection unit 106 may detect the occurrence of toppling.

### (3. Examples of additional processes)

### (3-1. Calculation of action score)

The scoring processing unit 109 included in the analysis result processing unit 107 calculates, for example, a score for evaluating an action that has occurred (an action score) for an action section including a jump section and/or a turn section detected through the processes described above with reference to FIGS. 2 to 13. The action score can be calculated by, for example, extracting physical amounts (feature amounts) indicating a quality or characteristics of an action from sensor data for an action section and weighting and adding them. The service control unit 112 generates information regarding the action (e.g., a jump or a turn) on the basis of the score calculated as described above.

With respect to a jump section, for example, duration of the section, angular displacement around the X axis/Y axis/Z axis for the section), a ratio of a free fall section, a magnitude of an impact at the time of takeoff/landing, and the like can be extracted as feature amounts for calculating a score. In addition, with respect to a turn section, for example, duration of the section, a displacement angle, a mean, a maximum value, and a standard deviation of a speed, a maximum value and a standard deviation of an angular velocity, and the like can be extracted as feature amounts for calculating a score.

Note that a coefficient of the weighting and addition can be set, for example, in accordance with a property of an action emphasized in the service 113 provided by the information processing device 100. In addition, a method for calculating an action score using feature amounts is not limited to the weighting and addition, and other computation methods may be used. For example, an action score may be calculated by applying a machine learning algorithm such as a linear regression model.

### (3-2. Clustering process)

Further, the clustering processing unit 108 included in the analysis result processing unit 107 applies a clustering algorithm, such as a k-means method using feature amounts and the like that are extracted for scoring, to action sections including jump sections and/or turn sections, which are detected through the processes described above with reference to FIGS. 2 to 13, and classifies the detected actions into clusters. In a case of jump sections or turn sections, for example, the actions may be classified into clusters on the basis of a length of duration of sections or a magnitude of rotation. The result of clustering is used to extract action sections so that actions, such as various types of jumps or turns, are included in a dynamic image when, for example, a digest dynamic image is provided as a service. In addition, classifying satisfactory and unsatisfactory actions into different clusters will help a user review his or her actions or can be used in coaching for improving actions.

Note that the analysis result processing unit 107 may compute a degree of similarity of action sections on the basis of a correlation coefficient of feature amounts as a similar process to clustering (action sections having a high degree of similarity can be treated in a similar manner to action sections classified into the same cluster). In addition, for example, the analysis result processing unit 107 may prepare feature amount patterns of actions of typical types in advance and determine to what type of action a newly generated action corresponds.

### (3-3. Estimation of sensor mounting state)

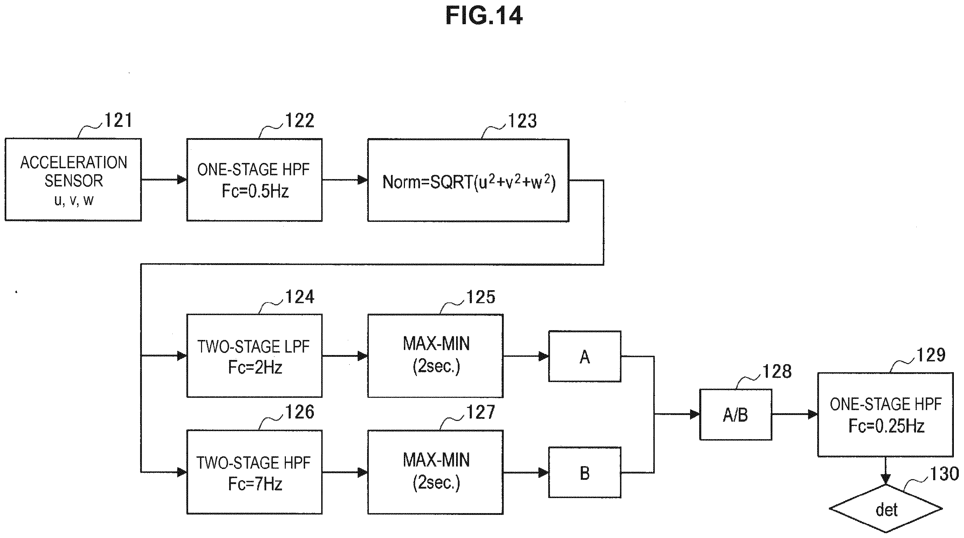

FIG. 14 is a block diagram illustrating an example of a process for estimating a sensor mounting state in an embodiment of the present disclosure. More specifically, the illustrated configuration determines whether a sensor that provides sensor data is mounted directly on the body of a user or mounted on a piece of equipment used by the user. The process shown is executed by, for example, the sensor data analysis unit 104 included in the information processing device 100. Note that, although specific cutoff frequencies (Fc) of filters and lengths of time frames are described in the illustrated example, these numerical values are merely examples and can be appropriately changed in accordance with actual characteristics of a sensor.

In the illustrated example, the reception unit 102 of the information processing device 100 receives sensor data provided by an acceleration sensor 121 with three axes (u, v, and w). The sensor data analysis unit 104 acquires the sensor data via the sensor device control unit 103. The sensor data analysis unit 104 first processes acceleration included in the sensor data with a one-stage HPF 122 (Fc = 0.5 Hz) and then executes a norm calculation 123. Further, using results obtained by processing the norm with a two-stage LPF 124 (Fc = 2 Hz) and a two-stage HPF (Fc = 7 Hz), the sensor data analysis unit 104 calculates amplitudes (differences between maximum values and minimum values) in a 2-second time frame (125 and 127). Using results (A and B) thereof, A/B is computed (128). The result of the computation is processed with a one-stage HPF 129 (Fc = 0.25 Hz), and then threshold determination 130 is executed.

The above-described determination process is based on attenuation of high frequency components of acceleration as the body of a user functions as a LPF when the sensor is mounted directly on the body of the user. A (the amplitude of a low frequency component that has passed the LPF 124)/ B (the amplitude of a high frequency component that has passed the HPF) of the above example has a greater value as a high frequency component of original acceleration attenuates more. Thus, in the threshold determination 130, when a value obtained by processing A/B with the HPF 129 is greater than a threshold value, the sensor can be determined to be mounted directly on the body of the user, and when it is not, the sensor can be determined to be mounted on a piece of equipment.

The result of the above-described estimation may be used in, for example, the sensor data analysis unit 104. In this case, the sensor data analysis unit 104 may change the threshold value, values set for the filters, and the like on the basis of whether the sensor is mounted on a body or a piece of equipment in the user action detection process described above. Alternatively, the result of the above-described estimation may be fed back to the sensor device control unit 103 to be used for setting parameters and the like with respect to a measurement of the sensor device or deciding a pre-processing method for sensor data by the sensor device control unit 103 or the like.

In the present embodiment, processes of sensor data may be adaptively controlled on the basis of an estimation of a state of a sensor data provision side, like, for example, the estimation of a sensor mounting state described above. As another example, the sensor data analysis unit 104 may estimate the type of sport in which an action has occurred using an algorithm such as machine learning from intensity of an impact, a pattern of motion, or the like detected by the acceleration sensor or the like. A sport may be estimated for each event that is generally recognized, or for each category such as board sports, water sports, cycling, motor sports, or the like. In addition, for example, when a sensor is mounted on a piece of equipment, the sensor data analysis unit 104 may estimate the type of equipment (e.g., in a case of skiing, whether the sensor is mounted on a ski or a ski pole). A result of the estimation may be used in, for example, control of a threshold, or values set for the filters for detecting an action, like the result of the estimation of a sensor mounting state, may be fed back to the sensor device control unit 103 to be used for controlling the sensor device or deciding a pre-processing method of sensor data.

### (4 Example of provision of content)

Here, a configuration relating to a provision of content of the information processing device according to the present embodiment will be described with reference to FIG. 1 again. In the present embodiment, in the information processing device 100, an information acquisition unit that acquires action information indicating a detected action of a user and a content provision unit that provides content that develops along a temporal or spatial sequence of an action are realized.

In the information processing device 100, for example, the reception unit 102 receives sensor data and time information (a timestamp) from a sensor device. The action detection unit 106 included in the sensor data analysis unit 104 stores information in which an action of a user detected on the basis of the sensor data is associated with the timestamp in the detected section information holding unit 110. Accordingly, the service control unit 112 can acquire action information of the user and temporal coordinates (timestamps) associated with the action from the detected section information holding unit 110. Note that, when a time interval from the reception of the sensor data by the reception unit 102 to the detection of the action by the action detection unit 106 is small, the action detection unit 106 may use time information (a timestamp) of a time point at which the action is detected instead of the timestamp received with the sensor data.

Also in the above-described example, the data received from the sensor device by the reception unit 102 may be associated with the position information of the user, and the information associated with the position information of the action of the user by the action detection unit 106 may be stored in the detected section information holding unit 110. In this case, the service control unit 112 can acquire the action information of the user and spatial coordinates (position information) associated with the action from the detected section information holding unit 110. In addition, when the action detection unit 106 is realized in a terminal device carried by or mounted on the user, the action detection unit 106 may use position information acquired by the terminal device at the time point at which the action was detected instead of the position information received along with the sensor data.

Alternatively, the service control unit 112 may acquire the spatial coordinates associated with the action by matching an action video acquired separately from the sensor data with the action information using the timestamps. Here, the spatial coordinates associated with the action may be defined using an absolute coordinate system of, for example, latitude, longitude, and the like, or may be defined using a relative coordinate system in an environment in which the action is performed, for example, in a case of a sport, with respect to a course, a court, a field, or the like.

Note that, in the present specification, action information is not limited to information directly indicating an action of a user detected by the action detection unit 106, and can include various kinds of information relating to the detected action of the user. Thus, in the above-described example, the action information includes not only an action detection result provided by the action detection unit 106, but also additional information generated by the analysis result processing unit 107.

As described above, the service control unit 112 can acquire the action information of the user and the temporal coordinates (the timestamps) and/or spatial coordinates (the position information) associated with the action from the detected section information holding unit 110. Alternatively, when the analysis result processing unit 107 stores the timestamps and/or the position information provided from the action detection unit 106 with the detection result of the action in the additional information holding unit 111 in association with additional information generated on the basis of the detection result of the action, the service control unit 112 can acquire the additional information regarding the action in addition to the temporal coordinates (the timestamps) and/or spatial coordinates (the position information) associated with the action from the additional information holding unit 111.

The service control unit 112 can provide content that develops along a temporal or a spatial sequence of the action on the basis of the information. The content includes, for example, a video or sound. The content may be game content that progresses by receiving an input of an action of the user. Note that details of the action, more specifically, a type of action, an action score, and the like may be reflected in development of the content.

Here, a temporal sequence of an action is defined using a series of temporal coordinates of a detected action. That is, the temporal sequence of the action is defined using an occurrence order and an occurrence interval of a series of actions that occurred in a certain time or space range. More specifically, for example, the temporal sequence of the action may be defined using an occurrence order and an occurrence interval of a series of jumps or turns (or timestamps of each action indicating them) performed while a user slides down a slope during snowboarding. In addition, the temporal sequence of the action may be defined using an occurrence order and an occurrence interval of a series of actions (or the timestamps of each of the actions indicating them) performed by the user, for example, from 10 a.m. to 10:30 a.m.

In addition, the spatial sequence of the action is defined using a series of spatial coordinates of a detected action. That is, the spatial sequence of the action is defined using occurrence positions of a series of actions in a certain time or space range. More specifically, for example, the spatial sequence of the action may be defined using occurrence positions (which can be, for example, relative coordinates with respect to a slope) of a series of jumps or turns while the user slides down the slope during snowboarding. In addition, for example, the spatial sequence of the action may be defined using occurrence positions (which can be, for example, absolute coordinates corresponding to latitude and longitude) of a series of actions performed by the user, for example, from 10 a.m. to 10:30 a.m.

The service control unit 112 may define, for example, a temporal sequence and/or a spatial sequence for a detected action and provide content that develops along the sequence. In this case, the content may include music with a tempo or melody that changes in accordance with a series of jumps or turns occurring while a user is sliding down a slope during snowboarding, and a video having content changing at time points of jumps or turns. Alternatively, the content may include game content whose story development changes in accordance with times or locations at which a series of actions of the user have occurred in one day. In addition, the content may further include other examples. Some of the examples will be described below.

In addition, the service control unit 112 may predict a temporal sequence and/or a spatial sequence for actions detected up to a current time on the basis of, for example, an environmental state of a user and provide content that develops along the sequence. In this case, the content may include game content in which a time or a location at which a task action is supposed to be detected in a temporal or spatial sequence of actions is designated with a series of jumps or turns occurring while the user slides down a slope during snowboarding set as task actions. Alternatively, the content may include game content in which a location or a time at which actions of the user are detected within a predetermined period of time, for example, in his or her daily activities. In addition, the content may further include other examples. Some of the examples will be described below.

### (4-1. Provision of virtual game course)

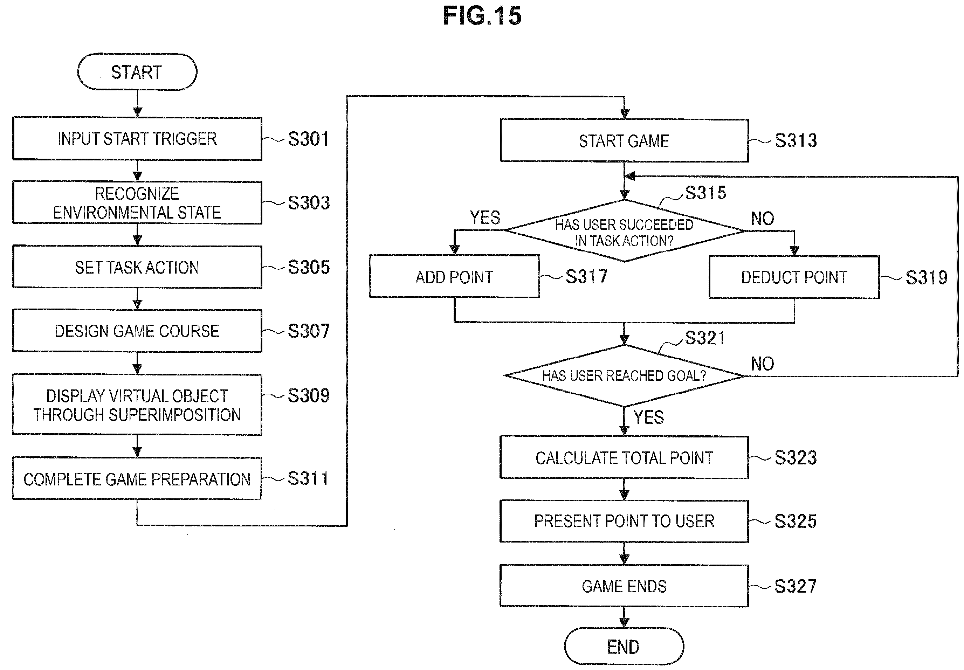

FIG. 15 is a flowchart showing an example of a process for providing a virtual game course in an embodiment of the present disclosure. In the illustrated example, game content in which a position included in a predicted spatial sequence of actions of a user and a task action to be detected at the position are designated is provided.

In the illustrated example, first, the service control unit 112 receives input of a start trigger (S301). The start trigger may be, for example, a user operation or the fact that the user has reached a position in a real space set as a starting position of a game course. Here, the service control unit 112 recognizes an environmental state on the basis of sensor data received by the reception unit 102, an image from a camera, or the like (S303). Here, the environmental state can include, for example, states of a length and a width of a course on which the user performs actions from a current time, a route to a goal, obstacles within the course, and the like.

Next, the service control unit 112 predicts a spatial sequence of actions performed by the user thereafter in accordance with the environmental state, and then sets a task action at one or a plurality of positions included in the spatial sequence (S305). A specific example of the task action will be described below. Further, the service control unit 112 designs a game course on the basis of the environmental state recognized in S303 and the position and the task action set in S305 (S307). The service control unit 112 displays a virtual object displaying the designed game course using a transmissive-type display such as a head-mounted display (HMD) worn by the user (S309), and thereby completes preparation for a game (S311).

Then, the service control unit 112 starts the game (S313). A user operation or a start of an action of the user may be designated to be a start timing of the game, or the game may be automatically started after the preparation for the game is completed. At this time, the display such as the HMD worn by the user may display a message prompting the user to start the game, or a message notifying the user that the game has started in addition to the virtually displayed game course. After the game is started, the service control unit 112 updates positions of the user in the game course on the basis of successively updated spatial coordinates of the user in a real space, and determines whether or not the user has succeeded in a designated action at the position set for the task action in S305 (S315). Here, a point is added if the user succeeds in the tack action (S317), and a point is deducted if not (S319). The service control unit 112 repeats the determination until the user reaches the goal of the game course (S321).

When the user reaches the goal of the game course, the service control unit 112 calculates total points on the basis of the determination result of S315 (S323). When the total points are calculated, a time taken to reach the goal and the like can also be considered. The service control unit 112 presents the calculated total points to the user (S325). At this time, the service control unit 112 may present details of points of individual task actions, points gained from elements other than the task actions, and the like to the user together with the total points. Then, the game ends (S327).

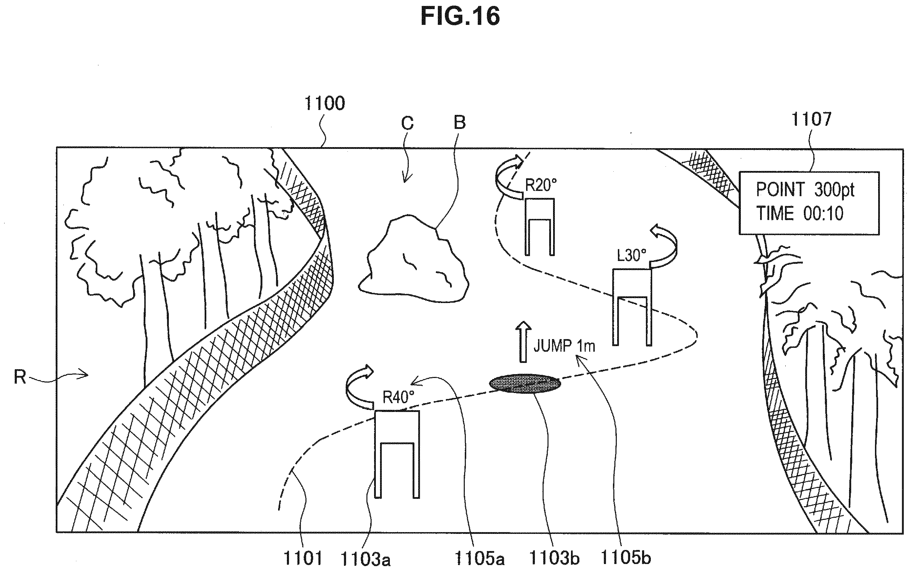

FIG. 16 is a diagram illustrating a first example of a virtual game course provided in an embodiment of the present disclosure. Referring to FIG. 16, a game screen 1100 displays a snowboarding course C to be superimposed on a real space R to the course belongs. In the illustrated example, the game screen 1100 includes a game course 1101. Objects displaying designated positions and task actions to be detected at the positions, more specifically, icons 1103 and text 1105, are displayed over the game course 1101 to be superimposed on the real space R as in the game course 1101. Furthermore, a status 1107 including points gained up to a current time point and an elapsed time may be displayed on the game screen 1100.

Here, in the illustrated example, the service control unit 112 predicts a spatial sequence of actions of a user on the basis of an environmental state of the user. More specifically, the service control unit 112 decides a length of a spatial sequence represented by the game course 1101 on the basis of the environmental state of the user at a time at which game content starts. For example, the service control unit 112 acquires images of a periphery of the user captured by a camera mounted on the user or installed on the course C and recognizes the environmental state on the basis of the images. In the above-described example, the service control unit 112 recognizes, states of a length and a width of the course C, a route to the goal, obstacles in the course C, and the like as the environmental state of the user, and sets the game course 1101 on the basis of the elements. As a result, the game course 1101 is set along the course C while avoiding an obstacle B present in the course C.

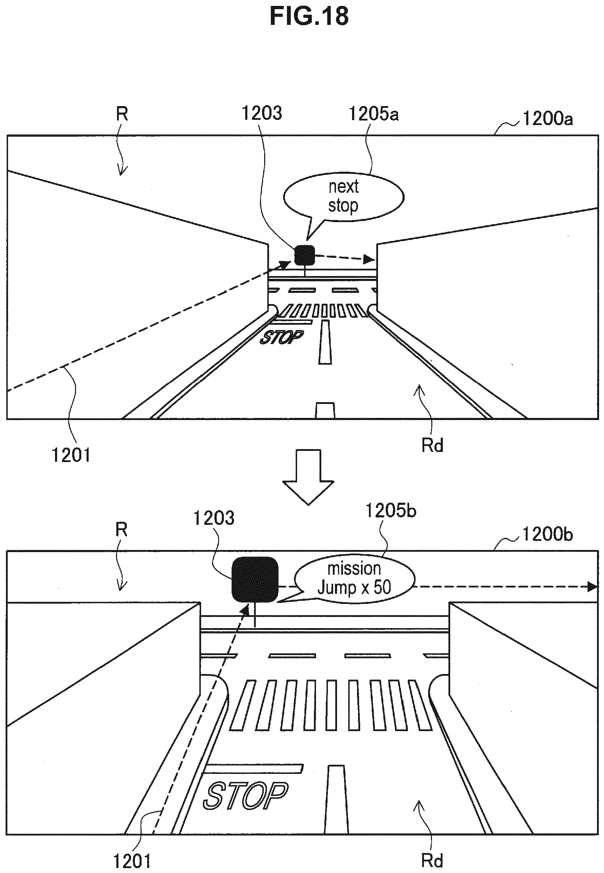

Note that the augmented reality (AR) technology can be applied to the display of the above-described game course 1101, icons 1103, text 1105, and the like. It is assumed in the present example that the user is wearing, for example, a transmissive-type display such as an HMD and the game screen 1100 can be superimposed on the image of the real space in a transmissive manner, however in a case in which safety of the user is ensured, for example, in a closed real space, the user may wear a non-transmissive type HMD or the like and play a game while viewing the game screen 1100 not showing a real space image. In addition, by superimposing a live view image of a camera on the game screen 1100 in a non-transmissive type HMD, a smartphone, a tablet, or the like, a similar experience as in the example shown in FIG. 16 may be obtained. The same applies to examples of FIGS. 18 to 22 that will be described below.

In the illustrated example, the icons 1103 include an icon 1103a indicating a position at which a turn is set as a task action and an icon 1103b indicating a position at which a jump is set as a task action. Text 1105a describing details of a turn indicates, for example, a rotation direction and a rotation angle of the turn. For example, the text 1105a "R40°" indicates that a turn rotating 40° to the right (clockwise) is designated as a task action. In addition, text 1105b describing details of a jump indicates, for example, a task action which is a jump and a height of a jump. For example, the text 1105b "JUMP 1m" indicates that a jump to a height of 1m is designated as a task action. As illustrated, icons indicating a rotation direction of a turn and a direction of a jump may be displayed along with the text 1105.

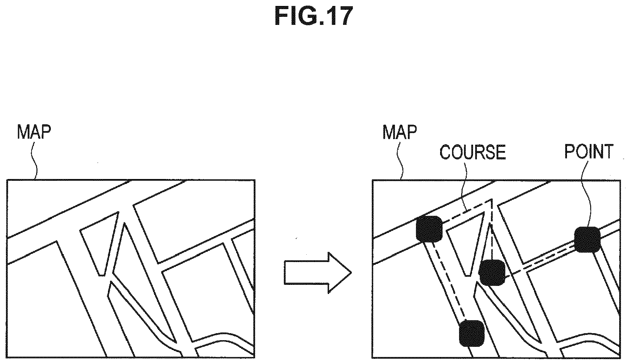

FIGS. 17 and 18 are diagrams illustrating a second example of a virtual game course provided in an embodiment of the present disclosure. In the example illustrated in FIGS. 17 and 18, a game course is set in a place in which courses are not necessarily set in a real space, more specifically, in an urban area. In this case, for example, the service control unit 112 recognizes an environmental state of a user on the basis of map information as illustrated in FIG. 17. More specifically, the service control unit recognizes states of a length and a width of a course that the user is predicted to cover within a predetermined period of time, a route to a goal, obstacles in the course, and the like on the basis of the map information and position information of the user at a time at which the game content is started, and sets a game course including points at which task actions are designated on the basis of the elements.

In the example illustrated in FIG. 18, a game screen 1200 is displayed to be superimposed on the real space R. The game screen 1200 displays a game course 1201 set along a certain road Rd in the real space R. The road Rd is not originally used as a course, but can be used as a course by, for example, extracting arbitrary points as illustrated in FIG. 17. An icon 1203 indicating a designated position and text 1205 indicating a task action to be detected at the position are displayed over the game course 1201 to be superimposed on the real space R like the game course 1201. The text 1205 may display content different depending on whether a distance to the icon 1203 is long and short as indicated by text 1205a on the game screen 1200 and text 1205b on the game screen 1200. In the illustrated example, the text 1205a schematically indicates presence of a task action and the text 1205b indicates details of the task action.

Here, a common point and a different point between the game course of the first example illustrated in FIG. 16 and the game course of the second example illustrated in FIGS. 17 and 18 will be described.

In the first example, the game course 1101 is set along the snowboarding course C existing in the real space. Since the user can perform sliding down along the course C, an actual movement trajectory of the user is similar to the game course 1101. Thus, when a deviation of a movement trajectory from the game course 1101 exceeds a given range, for example, a rule such as deduction of points may be set. In the first example, the service control unit 112 may first decide the game course 1101 along the course C and then decide positions at which task actions are set (as indicated by the icons 1103). Alternatively, when there are a plurality of courses C on which sliding is possible, the service control unit 112 may first decide on positions at which task actions are set and then decide the game course 1101 along the course C including the positions.

In addition, in the first example, since the user sequentially passes through the positions at which task actions are set while continuously sliding down the game course 1101, timings at which the task actions are performed or intervals at which the plurality of task actions are performed (e.g., perform three or more actions at an equal intervals) can also be designated.

On the other hand, in the second example, the game course 1201 is set in an urban area in which courses are not necessarily set in a real space. In such a case, the service control unit 112 may first decide positions at which task actions are set (as indicated by the icon 1203) and then decide the game course 1201 by linking the positions. In this case, the game course 1201 may be set by, for example, linking the positions at which the task actions are set to be the shortest distance, and the user may move in accordance with shapes of real roads, traffic regulations, and the like while referring to the game course 1201 as a brief guide indicating a direction toward a next destination. Alternatively, the game course 1201 may be set by linking the positions at which the task actions are set to be a route on which the user can move in accordance with shapes of roads, traffic regulations, and the like. In this case, a rule that a user should move along the game course 1201 may be set.

In addition, in the second example, movements of the user on the game course 1201 and execution of task actions at the designated positions can discontinuously occur. For example, 50 jumps are designated by the text 1205b on the game screen 1200b illustrated in FIG. 18. In this case, the user stops his or her movement at a position indicated by the icon 1203 (a corner of a sidewalk), performs 50 jumps, and then resumes a movement toward a next position. Using such discontinuity of execution, the game course 1201 may have additional manipulations in which a task action to be executed using dice or roulette is selected as in a board game (for example, an example in which, when a dice shows six dots, a task action designated at a position six spaces ahead of a current position may be performed is feasible, and positions designated halfway may or may not be passed. Alternatively, an example in which different task actions are set at the same position depending on the number of dots shown on a dice or a pocket that a ball lands in on a roulette wheel is feasible), or a subsequent position and task action are revealed when a task action designated at a certain position is performed.

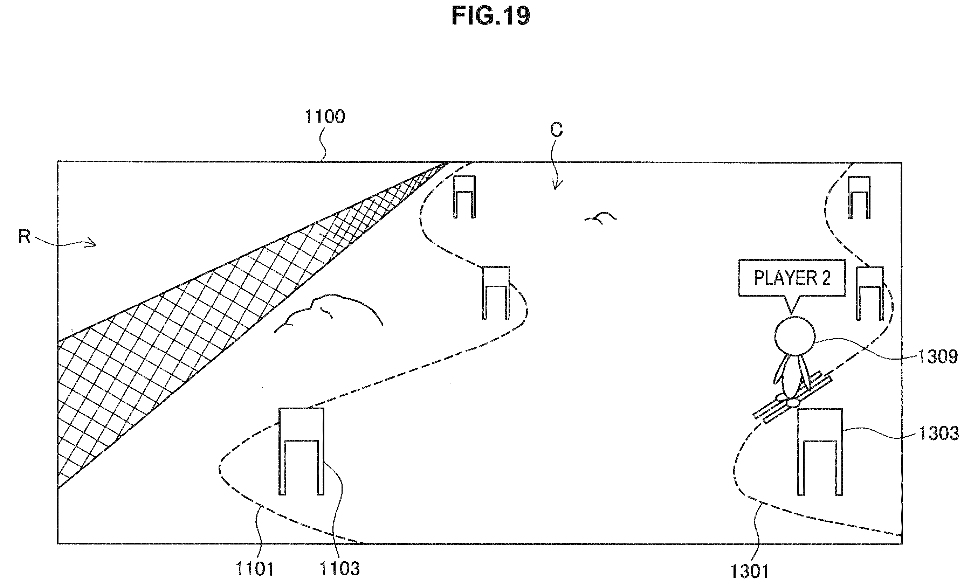

FIG. 19 is a diagram illustrating a third example of a virtual game course provided in an embodiment of the present disclosure. In the example illustrated in FIG. 19, not only are the game course 1101 set along the course C in the real space R and the icon 1103 indicating a position at which a task action is set displayed (although not illustrated, the text 1105 and the status 1107 indicating details of the task action may also be displayed), but also a game course 1301 of another user, an icon 1303 indicating a position at which a task action is set for the other user (text indicating the task action can also be displayed), and an avatar 1309 of the other user progressing along the game course 1301 are displayed on the game screen 1100, as in the above-described example illustrated in FIG. 16. Note that the avatar 1309 is an example of an object displaying the other user.

In the illustrated example, the game course 1301 of the other user displayed on the game screen 1100 of a first user can be configured on the basis of, for example, an environmental state of a second user who is at a different place from the first user. Thus, the game course 1301, the icon 1303, and the avatar 1309 displayed on the screen 1100 can be totally virtual. That is, the second user displayed by the avatar 1309 does not exist at a position of the real space R on which the avatar 1309 is superimposed.

On the other hand, in the illustrated example, the second user is provided with a similar screen to the game screen 1100 at a different place from the first user. The screen provided to the second user includes displays of the game course 1101, the icon 1103, and the like configured on the basis of the environmental state of the second user. In addition, the screen provided to the second user includes similar displays to those of the game course 1301, the icon 1303, and the avatar 1309 of the first user.

With this configuration, the first user and the second user can play a match with each other on the virtually game courses 1101 and 1301 that are arranged in parallel. It can be dangerous in reality for a plurality of users, who are not highly skilled people, to perform sliding in proximity to each other, however, when they play a match with each other in such virtual courses, they are not in danger even if toppling and the like occurs, and the users can enjoy the match.

Furthermore, various manipulations using virtuality may be established in the above-described game courses for virtual matches. For example, the game course 1101 and the game course 1301 may be parallel near each other or across from each other. In addition, the icon 1103 displayed on the game course 1101 and the icon 1303 displayed on the game course 1301 may indicate task actions prompting the first user and the second user to compete or cooperate with each other. More specifically, task actions may be set such that a point is given to a user who has achieved a task action first or points are given to both users when they are in synchronization with each other (with a time difference that is less than a threshold value) and succeed in the tack action.

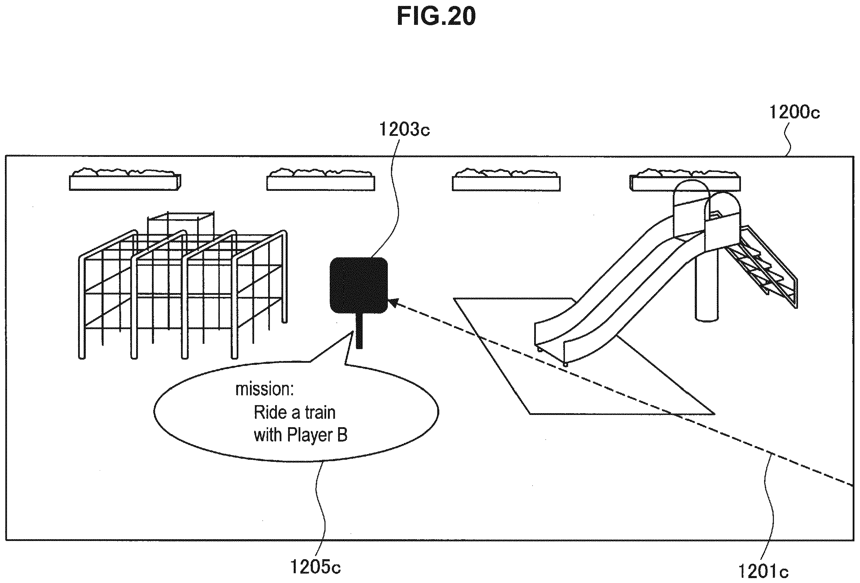

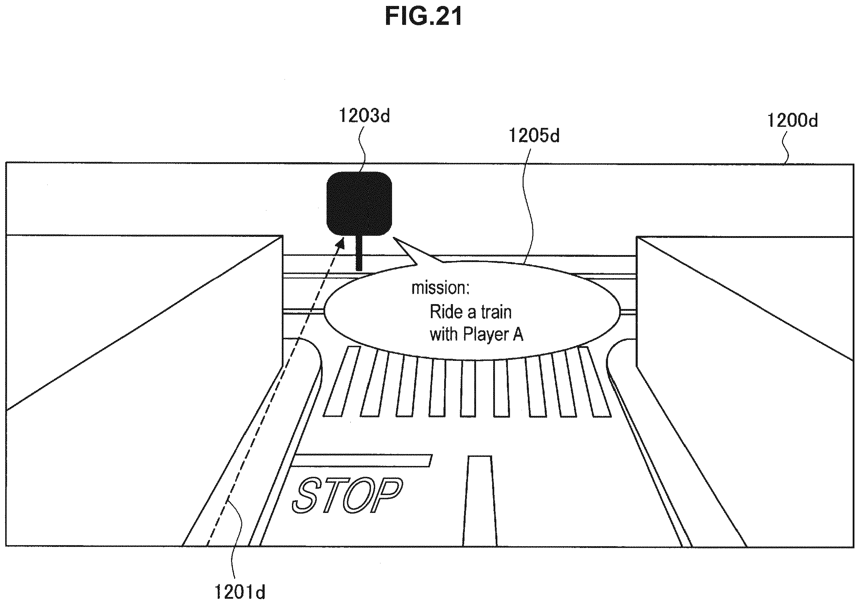

FIGS. 20 and FIG. 21 are diagrams illustrating a fourth example of a virtual game course provided in an embodiment of the present disclosure. In the example illustrated in FIGS. 20 and 21, a game screen 1200c is provided to a first user and a game screen 1200d is provided to a second user. The first user and the second user are present at different places. Each of the game screens 1200c and 1200d include a game course 1201, an icon 1203, and text 1205 displayed along a course set in an urban area, for example, as in the example of the game screen 1200 described above with reference to FIGS. 17 and 18.

A game course 1201c, an icon 1203c, and text 1205c are displayed on the game screen 1200c shown in FIG. 20 to be provided to the first user. The icon 1203c and the text 1205c indicate a task action designating that the user "get on a train with player B" (the second user). On the other hand, a game course 1201d, an icon 1203d, and text 1205d are displayed on the game screen 1200d shown in FIG. 21 to be provided to the second user. The icon 1203d and the text 1205d indicate a task action designating the user to "get on a train with player A" (the first user).

In the above-described example, a task action achieved by the first user and the second user cooperating is presented on the game screens 1200c and 1200d provided to each of the first user and the second user. The game screens 1200c and 1200d also enable a plurality of users to cooperatively play a game, however, the first user and the second user do not appear on their partners' game screens 1200 until, for example, the users meet each other at a designated station and get on a train together, unlike in the above-described example of FIG. 19.

Note that, in the example of FIGS. 20 and 21, the task action is achieved when the first user and the second user get on a train together and "getting on a train" is detected as an action of each of the users. In this case, the users can freely select their courses for meeting their partners. The service control unit 112 may recognize courses on which the users have intentionally wandered during a time from the presentation to the achievement of the task action as the game courses 1201 instead of presenting the prepared game courses 1201 to each of the users.

### (4-2. Provision of musical rhythm game)

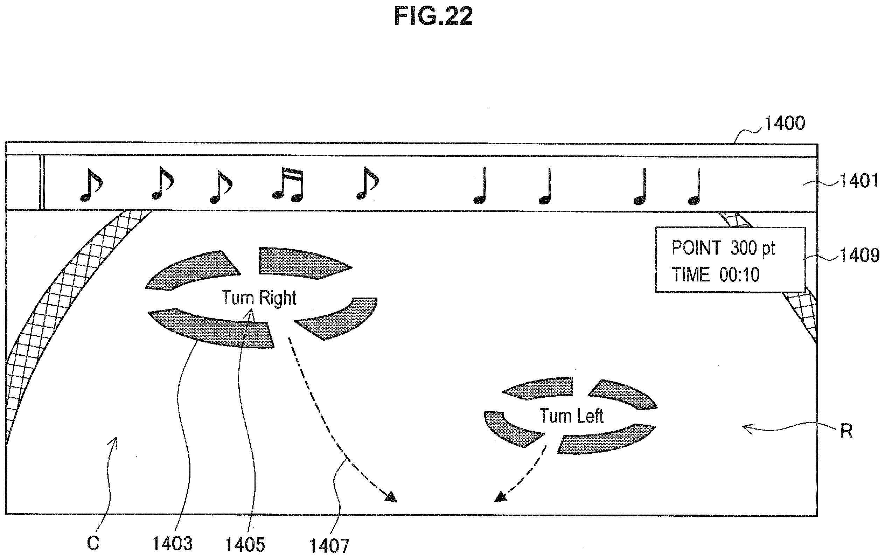

FIG. 22 is a diagram illustrating an example of a musical rhythm game provide in an embodiment of the present disclosure. In the illustrated example, game content, in which a time included in a temporal sequence of predicted actions of a user and a task action to be detected at the time are designated, is provided.

Referring to FIG. 22, a game screen 1400 is displayed to be superimposed on the real space R. The game screen 1400 displays a rhythm score 1401, an icon 1403 indicating a time at which a task action is set, text 1405 indicating details of the task action, a proximity display 1407 indicating a state in which the time indicated by the icon 1403 approaches second by second, and a status 1409 that includes points at a current time and an elapsed time. In the illustrated example, a musical rhythm game that develops along with actions of a user while sliding during snowboarding is provided. Although not illustrated, music corresponding to a temporal sequence of actions of the user can also be provided to the user via a headphone or a speaker while the user plays the game.

When the game screen 1400 is provided, the service control unit 112 predicts a temporal sequence of actions of the user and selects music corresponding to the temporal sequence. Note that the music may be selected through a user operation, and the music may be edited in accordance with the temporal sequence predicted by the service control unit 112. The service control unit 112 predicts the temporal sequence of actions of the user on the basis of an environmental state of the user. More specifically, for example, the service control unit 112 decides a length of the temporal sequence in which the game content develops on the basis of an environmental state of the user at a time at which the game content is started. In this case, the service control unit 112 may acquire an image of a periphery of the user captured by a camera mounted on the user or a camera installed on the course C and recognize the environmental state on the basis of the image.

In the above-described case, for example, the service control unit 112 recognizes states of a length and a width of the course C, a route to a goal, and the like as the environmental state of the user and sets a length of the temporal sequence in which the game content develops (i.e., a length of music provided corresponding to the temporal sequence) or a time at which a task action is set in the temporal sequence on the basis of the elements. In addition, the service control unit 112 may select a tempo or melody in accordance with a width of the course, the presence of obstacles, and the like. The service control unit 112 may set a task action in accordance with details of the selected music, more specifically, a tempo or melody thereof.

When the user selects music at a starting point of the course C, for example, the service control unit 112 estimates a length of the course C on the basis of position information of the user, action information of another user who has already slid down the course C, or the like. Further, the service control unit 112 edits the music in accordance with the length of the course C and decides a time at which a task action is to be set. Then, when the user starts sliding, a game starts, music starts to be reproduced, and the rhythm score 1401, the icon 1403, and the like starts operating. More specifically, the icon 1403 and the text 1405 approach along the proximity display 1407 aiming at the feet of the user sliding the course C of the real space R. Note that, the icon 1403 and the text 1405 are not necessarily associated with positions within the course C. The icon 1403 and the text 1405 flow toward the user at a constant speed so that, for example, they reach the feet of the user when a reproduction time of music associated with a task action arrives. The task action can be, for example, a turn or a jump. In addition, as the task action, for example, the icon 1403, the text 1405, or the like may assign a technique at a measure of a melody of the music.

Courses such as the game courses 1101 and 1201 of the above-described examples are not set in the illustrated example, and thus a user can freely set a course for sliding. During sliding, the user may perform a task action (a left turn or a right turn in the illustrated example) in accordance with music being reproduced, more specifically, when the icon 1403 and the text 1405 reach his or her feet. At this time, the service control unit 112 may recognize, for example, the width of the course C as an environmental state and dynamically change a task action so that a course on which the user slides down can be corrected if necessary. While a lot of points are added when a task action is performed at a time close to a designated time (a reproduction time of the music), a point can be deducted when a task action is performed at a time significantly deviating from the designated time or an action different from a task action is performed.

As another example, the service control unit 112 may provide a musical rhythm game that develops along with actions of a user during jogging. In this case, for example, when a user selects an expected duration of jogging, the service control unit 112 edits music in accordance with the expected duration and decides a time at which a task action is set. Note that an expected continuation time of the jogging (which is one of environmental states of the user) may be recognized on the basis of, for example, a schedule input by the user in advance. Then, when the user starts jogging, a game starts, music starts to be reproduced, and the rhythm score 1401, the icon 1403, and the like starts operating. More specifically, the icon 1403 and the text 1405 approach along the proximity display 1407 and aim at the feet of the user who is jogging. One game may be constituted by, for example, a plurality of pieces of music with different tempos, and when a user accomplishes jogging while performing task actions with changing tempos of music, a lot of points may be given.

### (4-3. Provision of content whose story develops in accordance with action)

In an embodiment of the present disclosure, the service control unit 112 may provide content whose story develops in accordance with actions of a user. Several examples of such content will be described below.

### (Task-type event)

The service control unit 112 may set, for example, task actions for a user in a daily life of the user and cause a story to develop in a game as the user performs the task actions along a designated temporal or spatial sequence. When, for example, an event, in which the user performs jogging with a character appearing as a friend or a partner of the user, is created and an action of jogging continuously performed for a predetermined amount of time or longer is detected, a level of likability gained from the character may be set to increase. In addition, when, for example, an event in which the user should go to meet a character at a designated place by a given time is created and the user is detected to have arrived at the designated place at the given time, a level of likability gained from the character may be set to increase.

### (Even trigger caused by behavior)

The service control unit 112 may create, for example, an event on the basis of a temporal or spatial sequence of actions indicated by an action detection result of a user. More specifically, when the user continuously comes home late, for example, the service control unit 112 may create an event of a morning call performed by a character to which the user has a high level of likability on a subsequent morning.

### (Utilization of action pattern)

The service control unit 112 may extract, for example, a regular pattern composed of a temporal or spatial sequence of actions such as commuting, eating, and the like from a previously detected action history of a user and may create a different event on the basis of whether a newly detected action of the user coincides with or is different from the pattern. For example, when the user is detected to have got on a bus for commuting at an unusual time (e.g., a bus one after a bus arriving at a usual time), an unusual character may appear in a game.

### (Setting of attribute of character)

The service control unit 112 may estimate, for example, an attribute of a user from a temporal or spatial sequence of actions indicated in a previously detected action history of the user and select an attribute of a character that appears in a game on the basis of the estimated attribute. In an example other than a game, a virtual personality in an agent program that provides a service in a terminal device of the user and the like may be selected in accordance with the attribute estimated from the temporal or spatial sequence of the actions indicated in the previously detected action history of the user.

### (Recollection based on action)

When an action having a similar temporal or spatial sequence to an action included in a previously detected action history of a user is detected, for example, the service control unit 112 may decide details of a conversation between a character or an agent of a game and the user on the basis of information regarding the previously detected action. For example, when an action such as a jump or a turn that occurs when sliding during snowboarding is detected after one year, a character or an agent may converse about another action detected during snowboarding one year ago, for example, moving by car that took time, many topplings during sliding, or the like.

### (Change in expression in context)

The service control unit 112 may reflect, for example, a time and a place relating to a temporal or spatial sequence included in an action detection result on an expression of a game. For example, when a user is estimated to be on board a train in an action detection result, a scene of the game may be set inside the train. In addition, when a route of the train which the user has boarded is specified, an announcement of a next station in the game or the like may be provided in accordance with an actual position of the user. At this time, settings of the game such as time (morning, evening, night, and the like) may be set to match actual detection results. In addition, characteristics or an appearance of an avatar appearing in the game may be changed in accordance with a place of the user. For example, when the user is on a street on which people of a characteristic age or social bracket gather, a character having a characteristic or appearance that match many people on the street may appear in the game.

### (4-4. Provision of collection content)

In an embodiment of the present disclosure, the service control unit 112 may provide content in which an action detection result of a user is used as a collection. Here, being used as a collection means that, for example, a thing is collected or exchanged as a thing having a tangible or intangible value. More specifically, the service control unit 112 may give each user a point on the basis of an action detection result of the user, and the user may collect points to exchange them for any kind of variable (which may be, e.g., a substantial item or a virtual item such as an avatar available in social media), or users may compete with each other with respect to amounts of points in their possession. Several examples of the content will be described below.

### (Adjustment of point application rate)

The service control unit 112 may give points to users for actions, for example, at application rates varying in accordance with a temporal or spatial sequence of actions to be detected. For example, when a point is given to a moving action, more points may be given to a moving action of running (a temporal sequence corresponding to the movement is short) than to a moving action of walking (a temporal sequence corresponding to the movement is long) if a movement distance is the same. In addition, for example, when a point is given to a jump while sliding during snowboarding, more points may be given to a jump which has a wide rotation angle (a spatial sequence corresponding to the jump is large). Note that a point application rate may be further adjusted in accordance with a combination with context information such as a time or a place.

### (Cooperatively achieved action)

The service control unit 112 may give, for example, a point to an action that is defined including a temporal or spatial sequence of actions and cooperatively achieved by a team of a plurality of users. More specifically, for example, when a task action that "a team of five users should consume 5,000 or more kcals during jogging within one week" (in this case, the part "within one week" corresponds to a temporal sequence) is given and it is determined from detected actions of the users that calories consumed by the five users through jogging exceeds 5,000 kcals, points may be respectively given to the 5 users.

### (Betting on action detection result)

The service control unit 112 may enable, for example, users to place a bet of points for a detection result of an action for which the users can compete such as the number of steps in one-day of walking or a height of a jump while sliding during snowboarding, more specifically, for a score calculated on the basis of a temporal or spatial sequence of actions. More specifically, for example, a user places a bet of a point for predicting a user who is likely to be ranked number one in an action detection result among users except for the user himself or herself. For example, after one day or after detection of actions such as a predetermined number of sliding operations ends, a point may be given to a user who was predicted to be the number one based on odds. Such betting may be performed by, for example, a plurality of users who are performing actions at the same place, and many users can join the betting via social media and the like.

### (5. Hardware configuration)

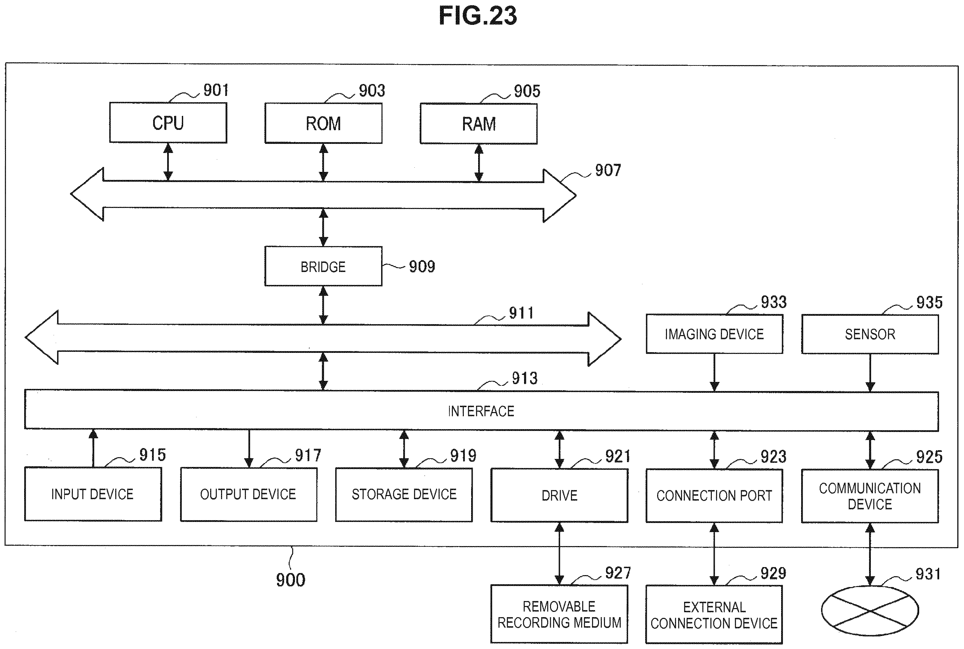

Next, with reference to FIG. 23, a hardware configuration of an information processing device according to an embodiment of the present disclosure is explained. FIG. 23 is a block diagram illustrating a hardware configuration example of an information processing device according to the embodiment of the present disclosure.

The information processing device 900 includes a central processing unit (CPU) 901, read only memory (ROM) 903, and random access memory (RAM) 905. In addition, the information processing device 900 may include a host bus 907, a bridge 909, an external bus 911, an interface 913, an input device 915, an output device 917, a storage device 919, a drive 921, a connection port 923, and a communication device 925. Moreover, the information processing device 900 may include an imaging device 933, and a sensor 935, as necessary. The information processing device 900 may include a processing circuit such as a digital signal processor (DSP), an application-specific integrated circuit (ASIC), or a field-programmable gate array (FPGA), alternatively or in addition to the CPU 901.

The CPU 901 serves as an arithmetic processing apparatus and a control apparatus, and controls the overall operation or a part of the operation of the information processing device 900 according to various programs recorded in the ROM 903, the RAM 905, the storage device 919, or a removable recording medium 927. The ROM 903 stores programs, operation parameters, and the like used by the CPU 901. The RAM 905 transiently stores programs used when the CPU 901 is executed, and various parameters that change as appropriate when executing such programs. The CPU 901, the ROM 903, and the RAM 905 are connected with each other via the host bus 907 configured from an internal bus such as a CPU bus or the like. The host bus 907 is connected to the external bus 911 such as a Peripheral Component Interconnect/Interface (PCI) bus via the bridge 909.

The input device 915 is a device operated by a user such as a mouse, a keyboard, a touch panel, a button, a switch, and a lever. The input device 915 may be a remote control device that uses, for example, infrared radiation and another type of radiowave. Alternatively, the input device 915 may be an external connection device 929 such as a mobile phone that corresponds to an operation of the information processing device 900. The input device 915 includes an input control circuit that generates input signals on the basis of information which is input by a user to output the generated input signals to the CPU 901. A user inputs various types of data to the information processing device 900 and instructs the information processing device 900 to perform a processing operation by operating the input device 915.

The output device 917 includes an apparatus that can report acquired information to a user visually, audibly, or haptically. The output device 917 may be, for example, a display device such as a liquid crystal display (LCD) or an organic electro-luminescence (EL) display, an audio output device such as a speaker or a headphone, or a vibrator. The output device 917 outputs a result obtained through a process performed by the information processing device 900, in the form of video such as text and an image, sounds such as voice and audio sounds, or vibration.

The storage device 919 is an apparatus for data storage that is an example of a storage unit of the information processing device 900. The storage device 919 includes, for example, a magnetic storage device such as a hard disk drive (HDD), a semiconductor storage device, an optical storage device, or a magneto-optical storage device. The storage device 919 stores therein the programs and various data executed by the CPU 901, various data acquired from an outside, and the like.

The drive 921 is a reader/writer for the removable recording medium 927 such as a magnetic disk, an optical disc, a magneto-optical disk, and a semiconductor memory, and built in or externally attached to the information processing device 900. The drive 921 reads out information recorded on the mounted removable recording medium 927, and outputs the information to the RAM 905. Further, the drive 921 writes the record into the mounted removable recording medium 927.

The connection port 923 is a port used to connect devices to the information processing device 900. The connection port 923 may include a Universal Serial Bus (USB) port, an IEEE1394 port, and a Small Computer System Interface (SCSI) port. The connection port 923 may further include an RS-232C port, an optical audio terminal, a High-Definition Multimedia Interface (HDMI) (registered trademark) port, and so on. The connection of the external connection device 929 to the connection port 923 makes it possible to exchange various data between the information processing device 900 and the external connection device 929.

The communication device 925 is a communication interface including, for example, a communication device for connection to a communication network 931. The communication device 925 may be, for example, a communication card for a wired or wireless local area network (LAN), Bluetooth (registered trademark), a near field communication (NFC), or a wireless USB (WUSB). Further, the communication device 925 may also be, for example, a router for optical communication, a router for asymmetric digital subscriber line (ADSL), or a modem for various types of communication. For example, the communication device 925 transmits and receives signals in the Internet or transits signals to and receives signals from another communication device by using a predetermined protocol such as TCP/IP. The communication network 931 to which the communication device 925 connects is a network established through wired or wireless connection. The communication network 931 may include, for example, the Internet, a home LAN, infrared communication, radio communication, or satellite communication.

The imaging device 933 is an apparatus that captures an image of a real space by using an image sensor such as a charge coupled device (CCD) and a complementary metal oxide semiconductor (CMOS), and various members such as a lens for controlling image formation of a subject image onto the image sensor, and generates the captured image. The imaging device 933 may capture a still image or a moving image.

The sensor 935 is various sensors such as an acceleration sensor, an angular velocity sensor, a geomagnetic sensor, an illuminance sensor, a temperature sensor, a barometric sensor, a pressure sensor, a distance sensor, and a sound sensor (microphone). The sensor 935 acquires information regarding a state of the information processing device 900 such as a posture of a housing of the information processing device 900, and information regarding an environment surrounding the information processing device 900 such as luminous intensity and noise around the information processing device 900. The sensor 935 may include a global navigation satellite system (GNSS) receiver that receives GNSS signals to measure latitude, longitude, and altitude of the apparatus.

The example of the hardware configuration of the information processing device 900 has been described. Each of the structural elements described above may be configured by using a general purpose component or may be configured by hardware specialized for the function of each of the structural elements. The configuration may be changed as necessary in accordance with the state of the art at the time of working of the present disclosure.

### Reference Signs List

- 100: information processing device
- 101: transmission unit
- 102: reception unit
- 103: sensor device control unit
- 104: sensor data analysis unit
- 105: feature amount extraction unit
- 106: action detection unit
- 107: analysis result processing unit
- 108: clustering processing unit
- 109: scoring processing unit
- 112: service control unit

## Claims

1. An information processing device (100) comprising:
an information acquisition unit (112) configured to acquire action information indicating a detected action of a user; and
a content providing unit (112) configured to
recognize an environmental state of the user on a basis of an image capturing a periphery of the user;
predict a spatial sequence of actions on a basis of the environmental state of the user;
provide content that develops in accordance with a temporal or spatial sequence of the action, wherein the content providing unit (112) provides content in which a position (1103; 1203) included in the spatial sequence and a task action to be detected at the position are designated;
present a screen (1100) including objects displaying the position (1103; 1203) and the task action to the user by superimposing the screen (1100) on a real space (R) in which the action occurs; and
determine whether or not the user has succeeded in the designated action at the position set for the task action.

2. The information processing device (100) according to claim 1, wherein the screen (1100) includes an object displaying the position for a first user, an object (1309) displaying the position for a second user who is different from the first user, and an object (1309) displaying the second user.

3. The information processing device (100) according to claim 1, wherein the content providing unit (112) decides a length of the spatial sequence on a basis of an environmental state of the user at a time at which the game content is started.

4. The information processing device (100) according to claim 1, wherein the content providing unit (112) provides content in which a time included in the temporal sequence and a task action to be detected at the time are designated.

5. The information processing device (100) according to claim 4, wherein the content providing unit (112) presents a screen (1100; 1200; 1400) including objects displaying the time and the task action to the user by superimposing the screen (1100; 1200; 1400) on a real space (R) in which the action occurs.

6. The information processing device (100) according to claim 4, wherein the content providing unit (112) predicts the temporal sequence on a basis of an environmental state of the user.

7. The information processing device (100) according to claim 6, wherein the content providing unit (112)
decides a length of the temporal sequence on a basis of an environmental state of the user at a time at which the content is started; and/or
recognizes the environmental state on a basis of a schedule of the user; and/or
wherein the temporal sequence is associated with music, and
the content providing unit provides the music to the user in addition to the content.

8. The information processing device (100) according to claim 1, wherein the content providing unit (112) provides
content whose story develops in accordance with the temporal or spatial sequence of the action; or
content in which an attribute of a character or a virtual personality is decided in accordance with the temporal or spatial sequence of the action; or
content in which a setting of a scene is decided in accordance with the temporal or spatial sequence of the action.

9. The information processing device according to claim 1, wherein the content providing unit (112) provides content which enables a betting from another user on a score calculated in accordance with the temporal or spatial sequence of the action.

10. An information processing method comprising:
acquiring (301) action information indicating a detected action of a user;
recognizing (303) an environmental state of the user on a basis of an image capturing a periphery of the user;
predicting (305) a spatial sequence of actions on a basis of the environmental state of the user;
providing (307), by a processor, content that develops in accordance with a temporal or spatial sequence of the action, and in which a position (1103; 1203) included in the spatial sequence and a task action to be detected at the position are designated;
presenting (309) a screen (1100) including objects displaying the position (1103; 1203) and the task action to the user by superimposing the screen (1100) on a real space (R) in which the action occurs; and
determining (315) whether or not the user has succeeded in the designated action at the position set for the task action.

11. A computer program comprising instructions, which when the program is executed by a computer, cause the computer to carry out the method of claim 10.

## Patentansprüche

1. Informationsverarbeitungsvorrichtung (100), umfassend:
eine Informationserfassungseinheit (112), die dazu ausgelegt ist, Aktionsinformationen zu erfassen, die eine detektierte Aktion eines Benutzers angeben; und
eine Inhaltsbereitstellungseinheit (112), die ausgelegt ist zum
Erkennen eines Umgebungszustands des Benutzers auf einer Basis eines Bilds, das eine Umgebung des Benutzers aufnimmt;
Vorhersagen einer räumlichen Sequenz von Aktionen auf einer Basis des Umgebungszustands des Benutzers;
Bereitstellen von Inhalt, der sich gemäß einer zeitlichen oder räumlichen Sequenz der Aktion entwickelt, wobei die Inhaltsbereitstellungseinheit (112) Inhalt bereitstellt, in dem eine Position (1103; 1203), die in der räumlichen Sequenz enthalten ist, und eine Aufgabenaktion, die an der Position zu detektieren ist, bestimmt werden;
Präsentieren eines Bildschirms (1100), einschließlich Objekten, die dem Benutzer die Position (1103; 1203) und die Aufgabenaktion anzeigen, indem der Bildschirm (1100) auf einen realen Raum (R), in dem die Aktion erfolgt, überlagert wird; und
Bestimmen, ob der Benutzer in der bestimmten Aktion an der für die Aufgabenaktion festgelegten Position erfolgreich war oder nicht.

2. Informationsverarbeitungsvorrichtung (100) nach Anspruch 1, wobei der Bildschirm (1100) ein Objekt, das die Position für einen ersten Benutzer anzeigt, ein Objekt (1309), das die Position für einen zweiten Benutzer, der von dem ersten Benutzer verschieden ist, anzeigt, und ein Objekt (1309), das den zweiten Benutzer anzeigt, einschließt.

3. Informationsverarbeitungsvorrichtung (100) nach Anspruch 1, wobei die Inhaltsbereitstellungseinheit (112) eine Länge der räumlichen Sequenz auf einer Basis eines Umgebungszustands des Benutzers zu einem Zeitpunkt, zu dem der Spielinhalt gestartet wird, festsetzt.

4. Informationsverarbeitungsvorrichtung (100) nach Anspruch 1, wobei die Inhaltsbereitstellungseinheit (112) Inhalt bereitstellt, in dem ein Zeitpunkt, der in der zeitlichen Sequenz enthalten ist, und eine Aufgabenaktion, die zu dem Zeitpunkt zu detektieren ist, bestimmt werden.

5. Informationsverarbeitungsvorrichtung (100) nach Anspruch 4, wobei die Inhaltsbereitstellungseinheit (112) einen Bildschirm (1100; 1200; 1400), einschließlich Objekten, die dem Benutzer den Zeitpunkt und die Aufgabenaktion anzeigen, indem der Bildschirm (1100; 1200; 1400) auf einen realen Raum (R), in dem die Aktion erfolgt, überlagert wird, präsentiert.

6. Informationsverarbeitungsvorrichtung (100) nach Anspruch 4, wobei die Inhaltsbereitstellungseinheit (112) die zeitliche Sequenz auf einer Basis eines Umgebungszustands des Benutzers vorhersagt.

7. Informationsverarbeitungsvorrichtung (100) nach Anspruch 6, wobei die Inhaltsbereitstellungseinheit (112)
eine Länge der zeitlichen Sequenz auf einer Basis eines Umgebungszustands des Benutzers zu einem Zeitpunkt, zu dem der Inhalt gestartet wird, festsetzt; und/oder
den Umgebungszustand auf einer Basis eines Plans des Benutzers erkennt; und/oder
wobei die zeitliche Sequenz mit Musik verbunden ist, und
wobei die Inhaltsbereitstellungseinheit dem Benutzer die Musik zusätzlich zu dem Inhalt bereitstellt.

8. Informationsverarbeitungsvorrichtung (100) nach Anspruch 1, wobei die Inhaltsbereitstellungseinheit (112) bereitstellt:
Inhalt, dessen Geschichte sich gemäß der zeitlichen oder räumlichen Sequenz der Aktion entwickelt; oder
Inhalt, in dem ein Attribut einer Figur oder einer virtuellen Persönlichkeit gemäß der zeitlichen oder räumlichen Sequenz der Aktion festgesetzt wird; oder
Inhalt, in dem ein Festlegen einer Szene gemäß der zeitlichen oder räumlichen Sequenz der Aktion festgesetzt wird.

9. Informationsverarbeitungsvorrichtung nach Anspruch 1, wobei die Inhaltsbereitstellungseinheit (112) Inhalt bereitstellt, der ein Wetten von einem anderen Benutzer auf eine Punktzahl, die gemäß der zeitlichen oder räumlichen Sequenz der Aktion berechnet wird, ermöglicht.

10. Informationsverarbeitungsverfahren, umfassend:
Erfassen (301) von Aktionsinformationen, die eine detektierte Aktion eines Benutzers angeben;
Erkennen (303) eines Umgebungszustands des Benutzers auf einer Basis eines Bilds, das eine Umgebung des Benutzers aufnimmt;
Vorhersagen (305) einer räumlichen Sequenz von Aktionen auf einer Basis des Umgebungszustands des Benutzers;
Bereitstellen (307), durch einen Prozessor, von Inhalt, der sich gemäß einer zeitlichen oder räumlichen Sequenz der Aktion entwickelt und in dem eine Position (1103; 1203), die in der räumlichen Sequenz enthalten ist, und eine Aufgabenaktion, die an der Position zu detektieren ist, bestimmt werden;
Präsentieren (309) eines Bildschirms (1100), einschließlich Objekten, die dem Benutzer die Position (1103; 1203) und die Aufgabenaktion anzeigen, indem der Bildschirm (1100) auf einen realen Raum (R), in dem die Aktion erfolgt, überlagert wird; und
Bestimmen (315), ob der Benutzer in der bestimmten Aktion an der für die Aufgabenaktion festgelegten Position erfolgreich war oder nicht.

11. Computerprogramm, umfassend Anweisungen, die bei Ausführung des Programms durch einen Computer den Computer dazu veranlassen, das Verfahren nach Anspruch 10 auszuführen.

## Revendications

1. Dispositif de traitement d'informations (100) comprenant :
une unité d'acquisition d'informations (112) conçue pour acquérir des informations d'action indiquant une action détectée d'un utilisateur ; et
une unité de fourniture de contenu (112) conçue pour :
reconnaître un état environnemental de l'utilisateur sur la base d'une image capturant une périphérie de l'utilisateur ;
prédire une séquence spatiale d'actions sur la base de l'état environnemental de l'utilisateur ;
fournir du contenu qui se développe en fonction d'une séquence temporelle ou spatiale de l'action, l'unité de fourniture de contenu (112) fournissant du contenu dans lequel on désigne une position (1103 ; 1203) comprise dans la séquence spatiale et une action de tâche à détecter au niveau de la position ;
présenter un écran (1100) comprenant des objets affichant la position (1103 ; 1203) et l'action de tâche à l'utilisateur en superposant l'écran (1100) sur un espace réel (R) dans lequel se produit l'action ; et
déterminer si l'utilisateur a réussi ou non dans l'action désignée au niveau de la position définie pour l'action de tâche.

2. Dispositif de traitement d'informations (100) selon la revendication 1, dans lequel l'écran (1100) comprend un objet affichant la position pour un premier utilisateur, un objet (1309) affichant la position pour un second utilisateur qui est différent du premier utilisateur, et un objet (1309) affichant le second utilisateur.

3. Dispositif de traitement d'informations (100) selon la revendication 1, dans lequel l'unité de fourniture de contenu (112) décide d'une longueur de la séquence spatiale sur la base d'un état environnemental de l'utilisateur au moment où le contenu de jeu démarre.

4. Dispositif de traitement d'informations (100) selon la revendication 1, dans lequel l'unité de fourniture de contenu (112) fournit le contenu dans lequel un moment compris dans la séquence temporelle et une action de tâche à détecter à ce moment sont désignés.

5. Dispositif de traitement d'informations (100) selon la revendication 4, dans lequel l'unité de fourniture de contenu (112) présente un écran (1100 ; 1200 ; 1400) comprenant des objets affichant le moment et l'action de tâche à l'utilisateur en superposant l'écran (1100 ; 1200 ; 1400) sur un espace réel (R) dans lequel se produit l'action.

6. Dispositif de traitement d'informations (100) selon la revendication 4, dans lequel l'unité de fourniture de contenu (112) prédit la séquence temporelle sur la base d'un état environnemental de l'utilisateur.

7. Dispositif de traitement d'informations (100) selon la revendication 6, dans lequel l'unité de fourniture de contenu (112)
décide d'une longueur de la séquence temporelle sur la base d'un état environnemental de l'utilisateur à un moment où le contenu démarre ; et/ou
reconnaît l'état environnemental sur la base d'une planification de l'utilisateur ; et/ou
dans lequel la séquence temporelle est associée à de la musique, et
l'unité de fourniture de contenu fournit la musique à l'utilisateur en plus du contenu.

8. Dispositif de traitement d'informations (100) selon la revendication 1, dans lequel l'unité de fourniture de contenu (112) fournit
un contenu dont l'histoire se développe en fonction de la séquence temporelle ou spatiale de l'action ; ou
un contenu dans lequel on décide d'un attribut d'un personnage ou d'une personnalité virtuelle en fonction de la séquence temporelle ou spatiale de l'action ; ou
un contenu dont on décide le réglage d'une scène en fonction de la séquence temporelle ou spatiale de l'action.

9. Dispositif de traitement d'informations selon la revendication 1, dans lequel l'unité de fourniture de contenu (112) fournit un contenu qui permet un pari provenant d'un autre utilisateur sur un score calculé en fonction de la séquence temporelle ou spatiale de l'action.

10. Procédé de traitement d'informations comprenant :
l'acquisition (301) d'informations d'action indiquant une action détectée d'un utilisateur ;
la reconnaissance (303) d'un état environnemental de l'utilisateur sur la base d'une image capturant une périphérie de l'utilisateur ;
la prédiction (305) d'une séquence spatiale d'actions sur la base de l'état environnemental de l'utilisateur ;
la fourniture (307), par un processeur, du contenu qui se développe en fonction d'une séquence spatiale ou temporelle de l'action, et dans lequel on désigne une position (1103 ; 1203) comprise dans la séquence spatiale et une action de tâche à détecter au niveau de la position ;
la présentation (309) d'un écran (1100) comprenant des objets affichant la position (1103 ; 1203) et l'action de tâche à l'utilisateur en superposant l'écran (1100) sur un espace réel (R) dans lequel se produit l'action ; et
la détermination (315) pour savoir si l'utilisateur a réussi ou non dans l'action désignée au niveau de la position définie pour l'action de tâche.

11. Programme informatique comprenant des instructions qui, lorsque le programme est exécuté par un ordinateur, amènent l'ordinateur à mettre en œuvre le procédé selon la revendication 10.
